(19) **Europäisches Patentamt**
**European Patent Office**
**Office européen des brevets**

(11) **EP 4 256 367 B1**

(12) **EUROPEAN PATENT SPECIFICATION**

(45) Date of publication and mention
of the grant of the patent:
**20.08.2025 Bulletin 2025/34**

(21) Application number: **21824640.3**

(22) Date of filing: **01.12.2021**

(51) International Patent Classification (IPC):
**G01S 7/4861** (2020.01)    **G01S 7/4865** (2020.01)
**G01S 17/10** (2020.01)    **G01C 3/00** (2006.01)
**G01J 11/00** (2006.01)    **G04F 13/02** (2006.01)

(52) Cooperative Patent Classification (CPC):
**G01S 17/10; G01S 7/4861; G01S 7/4865;**
G01S 7/4866

(86) International application number:
**PCT/GB2021/053134**

(87) International publication number:
**WO 2022/118014 (09.06.2022 Gazette 2022/23)**

(54) **APPARATUS AND METHOD FOR DUAL-COMB DISTANCE METROLOGY USING MULTI-PHOTON DETECTION**

VORRICHTUNG UND VERFAHREN FÜR DUALKAMMABSTANDSMETROLOGIE MIT MULTIPHOTONENDETEKTION

APPAREIL ET PROCÉDÉ DE MÉTROLOGIE DE DISTANCE À DOUBLE PEIGNE UTILISANT UNE DÉTECTION MULTIPHOTONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.12.2020 GB 202019025**

(43) Date of publication of application:
**11.10.2023 Bulletin 2023/41**

(73) Proprietor: **Renishaw PLC**
**Wotton-under-Edge, Gloucestershire GL12 8JR (GB)**

(72) Inventors:
• **WESTON, Nicholas, John**
**Edinburgh Lothian EH14 4AP (GB)**
• **REID, Derryck, Telford**
**Edinburgh Lothian EH14 4AS (GB)**
• **WRIGHT, Hollie**
**Edinburgh Lothian EH14 4AS (GB)**

(74) Representative: **Dunn, Paul Edward et al**
**Renishaw plc**
**Patent Department**
**New Mills**
**Wotton-under-Edge, Glos. GL12 8JR (GB)**

(56) References cited:
**JP-A- H11 173 921**    **US-A1- 2009 180 099**
**US-A1- 2011 285 980**

• WRIGHT HOLLIE ET AL: "Carrier-Free Dual-Comb Distance Metrology Using Two-Photon Detection", 2021 CONFERENCE ON LASERS AND ELECTRO-OPTICS EUROPE & EUROPEAN QUANTUM ELECTRONICS CONFERENCE (CLEO/EUROPE-EQEC), IEEE, 21 June 2021 (2021-06-21), pages 1, XP033978569, DOI: 10.1109/CLEO/EUROPE-EQEC52157.2021.9541761
• WRIGHT HOLLIE ET AL: "Carrier-Free Dual-Comb Distance Metrology Using Two-Photon Detection", 2021 CONFERENCE ON LASERS AND ELECTRO-OPTICS (CLEO), OSA, 9 May 2021 (2021-05-09), pages 1 - 2, XP034001616

**(Cont. next page)**

- ABE TETSUYA ET AL: "Distance measurement based on two-photon absorption process in Si-avalanche photodiode with pulsed reference light", SPIE PROCEEDINGS; [PROCEEDINGS OF SPIE ISSN 0277-786X], SPIE, US, vol. 11525, 8 November 2020 (2020-11-08), pages 1152504 - 1152504, XP060134699, ISBN: 978-1-5106-3673-6, DOI: 10.1117/12.2580487
- TANAKA Y ET AL: "Resolution and noise factor of distance measurement using two-photon absorption process in photodetector", JAPANESE JOURNAL OF APPLIED PHYSICS, JAPAN SOCIETY OF APPLIED PHYSICS, JP, vol. 46, no. 8A, 1 August 2007 (2007-08-01), pages 5331 - 5337, XP001518066, ISSN: 0021-4922, DOI: 10.1143/JJAP.46.5331
- SHENG LUO ET AL: "Two-photon superbunching effect of broadband chaotic stationary light at femtosecond timescale based on cascaded Michelson interferometer", ARXIV.ORG, CORNELL UNIVERSITY LIBRARY, 201 OLIN LIBRARY CORNELL UNIVERSITY ITHACA, NY 14853, 30 November 2020 (2020-11-30), XP081824642
- CASTRO-MARÍN PABLO ET AL: "Webcam autofocus mechanism used as a delay line for the characterization of femtosecond pulses", REVIEW OF SCIENTIFIC INSTRUMENTS, AMERICAN INSTITUTE OF PHYSICS, 2 HUNTINGTON QUADRANGLE, MELVILLE, NY 11747, vol. 86, no. 8, 1 August 2015 (2015-08-01), XP012199928, ISSN: 0034-6748, [retrieved on 19010101], DOI: 10.1063/1.4929366

**EP 4 256 367 B1**

**Description**

The present invention relates to optical distance metrology and more particularly to an improved apparatus and method for optical distance measurement that uses multi-photon effect detection.

Many techniques for optical distance measurement are known. The inherent trade-off between accuracy/precision, ambiguity range and update rate has typically led to such techniques being optimised for either high precision or extended range capabilities. For example, carrier-wavelength interferometry involves analysing the changing phase of an optical signal to determine distances. Precision-focused carrier-wavelength interferometry techniques, such as multi-wavelength interferometry (MWI) and frequency scanning interferometry (FSI), can achieve nanometre-level resolutions but require slow scanning to measure distances longer than a few millimetres. Conversely, light detection and ranging (LIDAR) is a pulsed time-of-flight based technique which records the difference in arrival time of single pulses to determine distances. Although LIDAR can rapidly probe long ambiguity ranges, the resolution of the technique is limited to a few millimetres due to the limited bandwidth of state-of-the-art photodetectors.

A coherent, dual-comb distance metrology system is described in US2011/0285980 that is capable of high-precision absolute distance measurements over long ambiguity ranges at rapid update rates. As illustrated in accompanying figure 1 (see also figure 3 of US2011/0285980), the coherent, dual-comb distance metrology technique employs two mode-locked lasers (also referred to as frequency combs) that have a near-identical pulse repetition frequency. The first frequency comb is a so-called probe comb that generates a train of ultrashort pulses 2 at a first repetition rate ($f_{rep-probe}$). The second frequency comb is a so-called local oscillator (LO) comb that generates a train of ultrashort pulses 4 at a slightly different repetition rate ($f_{rep-LO}$). The train of ultrashort pulses 2 generated by the probe comb are reflected off a target mirror 6 and also partially reflected from a surface 8 of a transmissive reference optic 10. Target pulses 12 and reference pulses 14 are produced by reflections of the ultrashort pulses 2 generated by the probe comb and returned from the target mirror 6 and reference optic 10 respectively. The target and reference pulses are combined with the train of ultrashort pulses 4 (i.e. generated by the LO comb) at a beam splitter 16 and passed to a detector 18.

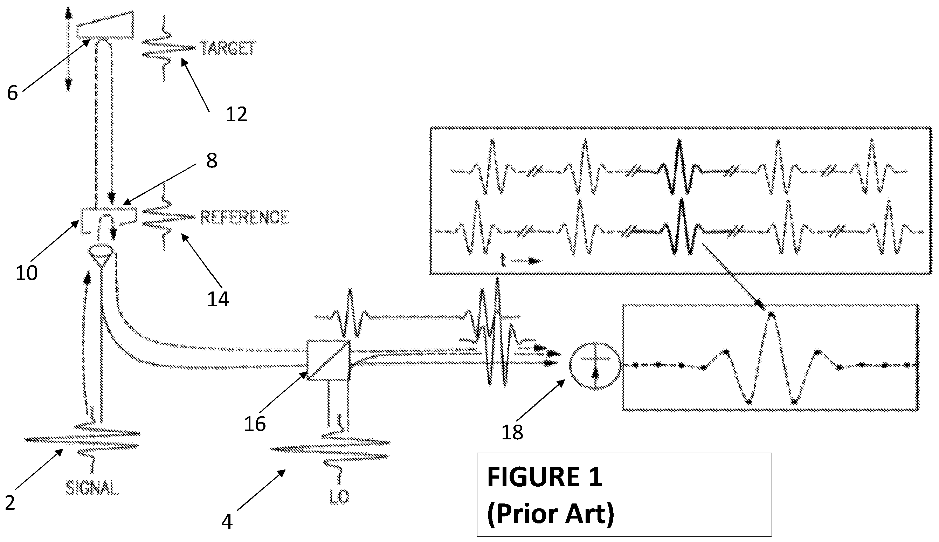

As mentioned above, the repetition frequency of the two frequency combs differ slightly (by $\Delta f_{rep}$) and in one embodiment of US2011/0285980 the probe and LO combs have repetition rates of 100.021 and 100.016 MHz respectively. The LO pulses thus act to temporally gate the return pulses from the probe comb to create a series of interferograms. In particular, the detector 18 sees a series of pairs of interferograms repeated at the difference in the repetition rates ($\Delta f_{rep}$). The insets to figure 1 shows the interferogram that is produced at the detector 18 due to the interference of a probe pulse with a LO pulse. The difference in arrival time between the reference and target pulses in each interferogram pair thus provides a time-of-flight measurement of the distance between the reference optic 10 and the target mirror 6. Averaging of the time-of-flight measurement may be repeated until the precision of the measurement falls below $\lambda/4$, at which point interferometric phase analysis of the interferograms can be used to provide a higher resolution correction to the time-of-flight measurement. For example, the system of US2011/0285980 was shown to have a precision of 200 $\mu$m using the time-of-flight information, in 200 $\mu$s of averaging. By adding the phase information from the interferometric analysis, the precision was improved to 5nm for a total measurement time of 60ms.

Coherent, dual comb distance metrology of the type described in US2011/0285980 has thus been found to successfully measure absolute distances of arbitrary lengths. The technique thus has advantages over MWI, FSI, lidar and other common alternatives since it can measure absolute distances with high precision, long ambiguity ranges and rapid update rates. The temporal gating of the probe pulses with the LO pulses also eliminates the risk of spurious reflections which would lead to systematic errors in other techniques.

Despite having various advantages over alternative optical metrology techniques, coherent dual-comb metrology of the type described in US2011/0285980 has yet to make the transition from laboratory investigation to industrial application for a number of reasons. Firstly, the precision of the time-of-flight part of a dual-comb measurement is limited by timing jitter from the combs (i.e. deviations in the rate at which pulses leave the comb cavity). Furthermore, once the measurement is handed over to interferometric analysis, the measurement accuracy is also limited by phase noise from the combs. For this reason, locking of the repetition frequencies ($f_{rep}$) and carrier-envelope-offset frequencies ($f_{CEO}$) of both combs is considered necessary to reduce measurement uncertainty. This, however, has the disadvantage of requiring multiple locking loops with several stable reference sources, making the overall system very complex and relatively expensive to manufacture. This is one of the main reasons why coherent, dual-comb metrology systems have not been adopted for industrial metrology applications.

A number of attempts have been made previously to reduce the complexity of coherent, dual comb metrology systems to allow their use in practical applications. Examples of some of these variant systems are briefly outlined below.

A simplified system that uses free-running combs and only extracts the time-of-flight information from the interferograms is described in Liu, et al. (Optics Express, 2011, Vol. 19, No.19). The data analysis performed to extract the time-of-flight data from the interferograms involves taking the Hilbert transform of the raw data to extract the envelope of each interferogram. A Gaussian or sech function is then fitted to each envelope to determine its centre point. In such systems, the precision of the time-of-flight measurement is limited by how accurately the centre point of the interferograms

3

can be determined. If an interferogram is not well defined, perhaps because it contains too few interference fringes, the Hilbert transform fails and the calculated envelope of the interferogram is distorted, leading to inaccurate distance measurements. The system described in Liu et al. managed to achieve $2\mu m$ precision in a $140\mu s$ measurement time and, with averaging, the precision was improved to 200nm in a 20ms acquisition time.

The use of optical cross correlation has also been demonstrated by Zhang, H. et al, (Optics Express, 2014, 22(6), pp.6597-6604). In this arrangement, the interferograms are passed through a periodically poled potassium titanyl phosphate (PPKTP) crystal to generate a second harmonic signal. This produces an intensity cross-correlation that is equivalent to the envelope of the interferogram. Although this technique has proven to produce similar results to the technique described in US2011/0285980, the PPKTP crystal adds complexity and additional expense to the system.

Shi, H et al (2015, CLEO: Science and Innovations, pp. SF2L-3, Optical Society of America) demonstrated another technique that involved using a PPKTP crystal in a balanced detection, known as balanced optical cross-correlation (BCC). The two second-harmonic generated signals produced are collected in a balanced detection, yielding an s-shaped signal. The zero-crossing point of the steep central slope quantifies the time delay between the reference and target interferograms. In theory, this technique is attractive as the steep slope of the signal could facilitate identification of the zero-crossing point with higher precision than the identification of the centre point of the interferogram envelope. However, the very precise optical alignment required for the balanced detection is highly undesirable for industrial applications.

Although dual-comb metrology has been considered to have potential for many applications, the various constraints outlined above have prevented its uptake for industrial applications. This is despite considerable effort being expended over many years by multiple research teams to overcome the above described limitations.

According to a first aspect of the present invention, there is provided an optical distance measurement apparatus, comprising;

> at least one optical pulse generator for generating a train of gating pulses and a train of probe pulses, the train of gating pulses having a different repetition rate than the train of probe pulses, and
> an optical probing arrangement for directing the train of probe pulses to one or more objects and for collecting returned probe pulses returned from the one or more objects,
> characterised in that the apparatus comprises a multi-photon effect detector and is configured to direct both the train of gating pulses and the returned probe pulses to the multi-photon effect detector.

The first aspect of the present invention thus provides an optical distance measurement or ranging apparatus for measuring the distance of one or more objects. The optical distance measurement apparatus may be used in a variety of different applications. For example, it could be used as a laser tracker to measure the position of one or more points on the surface of an industrial object, to calibrate coordinate measuring machines or the like, as an encoder for measuring the relative position of moving parts of a machine, or for large scale length metrology etc.

The apparatus comprises at least one optical pulse generator that produces a train of gating pulses and a train of probe pulses. As explained below, the gating pulses and the probe pulses are preferably ultrashort laser pulses. These ultrashort laser pulses may be produced by two separate mode-locked lasers; for example, a local oscillator mode-locked laser and a probe mode-locked laser respectively. The train of gating pulses are generated at a different repetition rate than the train of probe pulses. As also explained in more detail below, trains of pulses generated with different pulse frequencies (i.e. with different repetition rates) will temporally coincide (beat) with one another at a frequency that is equal to the difference between the pulse frequencies. In this manner, the gating pulses act to gate the probe pulses when the probe and gating pulse trains are combined.

The optical probing arrangement of the apparatus directs the train of probe pulses that are produced by the at least one optical pulse generator towards one or more objects. The train of probe pulses may be considered as forming an optical probe beam and the optical probing arrangement may include various optical components (lenses, mirrors, waveplates, optical filters etc) that steer or direct the probe beam along a desired optical path to the one or more objects. The optical probing arrangement is also configured to collect the returned probe pulses that are returned (reflected) from the one or more objects. The returned probe pulses may be reflected back from the object along the same optical path taken by the probe pulses incident on that object. It would, of course, be possible for the probe beam to be reflected or partially reflected from multiple different objects. In one preferred embodiment described below, the optical probing arrangement may be arranged so that probe pulses are returned from both a reference object and a target object. In such an example, the returned probe pulses may comprise a train of reference pulses (i.e. returned from the reference object) along with a train of target pulses (i.e. returned from the target object).

The train of gating pulses and the returned probe pulses are both directed to the multi-photon effect detector. The so-called multi-photon effect is an instantaneous effect that is caused by two or more photons arriving together (e.g. within a femtosecond of one another) at the detector. The two or more photons are absorbed and the detector responds to the combined photon energy. In other words, the two or more photons are absorbed together as if they were one photon. For a multi-photon effect detector comprising a semi-conductor material, the combined energy of the multiple photons that are absorbed together is sufficient to excite a single photoelectron so as to cross the bandgap thus producing a detectable photocurrent. The multi-photon absorption effect response that is exhibited by such multi-photon effect detectors is typically strongly non-linear. The peak in the intensity of the output electrical signal generated when a multi-photon absorption event occurs (i.e. due to the concurrent arrival of a gating pulse and a returned probe pulse) is thus readily distinguishable from background levels (e.g. due to random two-photon events, electrical noise etc).

The multi-photon effect detector thus detects the (temporally) coincident arrival of a probe pulse and a gating pulse. As explained above, the frequency at which probe and gating pulses will arrive simultaneously at the multi-photon effect detector is equal to the difference in the repetition frequencies of the probe and gating pulse trains. The multi-photon effect detector allows the time of such events to be determined, from which distance (time-of-flight) information can be obtained. For example, the gating of returned pulses from both a target object (i.e. target pulses) and a reference object (i.e. reference pulses) enables the distance between the reference and target objects to be measured.

Importantly, the use of the multi-photon effect in accordance with the present invention (i.e. to detect the concurrent arrival of both a gating pulse and returned probe pulse) removes the requirement found in prior art systems for the returned probe pulses to optically interfere with the gating pulses. This is because the multi-photon absorption effect is an energy effect rather than an optical interference effect. The use of a multi-photon effect detector thus removes the essential requirement associated with prior art dual comb systems (e.g. as described in US2011/0285980) that the gating and probe photons must optically interfere at the detector.

The present invention thus has an advantage over prior art (interference based) systems such as those described in US2011/0285980 that there is no need to control the phase of the electric field within each pulse in order to ensure the envelope of a generated interferogram can be accurately extracted. This means the need to implement phase control within the pulse generator can be avoided and hence free-running mode-locked lasers can be used to generate the gating and probe pulses. The use of a multi-photon effect detector also makes it possible to optically amplify the returned probe pulses because, unlike interference-based systems, the quality of the optical wavefront reaching the multi-photon effect detector has minimal impact on the resolution of the multi-photon absorption detection process. Furthermore, it also removes the requirement to ensure the gating and probe pulses have substantially overlapping wavelengths (which is necessary to obtain optical interference).

The present invention thus provides a distance measurement apparatus that is less complex, more resilient, and cheaper to manufacture than dual comb distance measurement systems of the type previously described in US2011/0285980. In particular, the distance measurement apparatus of the present invention has been found to be highly suitable for industrial metrology applications.

It is noted that multi-photon effect detection has been proposed previously, in a different technical field, to provide an interferometric autocorrelator. US6195167 describes an autocorrelator for measuring the duration of ultrashort laser pulses using a two-photon effect detector. The autocorrelator is arranged to measure pairs of relatively delayed daughter pulses that are derived from a parent pulse by use of an interferometer. Such autocorrelator devices have been used previously to characterise ultrashort laser pulses (e.g. to measure pulse shape, pulse duration etc).

Advantageously, the multi-photon effect detector has a bandgap that is greater than the photon energy of the single photons of the gating and probe pulses. The photon energy is the energy carried by a single photon and, as explained in more detail below, is directly proportional to the photon's electromagnetic frequency and thus, equivalently, is inversely proportional to the wavelength. The wavelengths of the gating pulses and the probe pulses are thus preferably long enough (i.e. the frequencies of such pulses are sufficiently low) so that the energy of a single photon is less than the detector bandgap. This means the multi-photon effect detector is substantially insensitive to the single photons of the trains of gating and probe pulses (i.e. because such photons do not have enough energy to excite a photoelectron to cross the band gap). The detector does, however, detect the (temporally) coincident arrival of two or more photons that have a combined energy greater than the bandgap.

Advantageously, the multi-photon effect detector comprises a two-photon detector. In such an arrangement, the combined energy of a gating pulse photon (i.e. a photon of the gating pulses) and a probe pulse photon (i.e. a photon of the probe pulses) is preferably greater than the bandgap of the two-photon effect detector. In other words, the energy imparted when the two-photon effect detector absorbs both a probe photon and gating photon together is enough to excite a photoelectron sufficiently for it to cross the bandgap. As explained below, the two-photon absorption effect is a strongly non-linear (quadratric) effect.

Although two-photon effect detection is advantageous for simplicity, it should be noted that multi-photon effect detection could be implemented in which three or more photons arriving together at the multi-photon effect detector have a combined energy greater than the detector bandgap. Taking the example of three-photon detection, the bandgap of the multi-photon effect detector could be selected to be greater than the combined energy of two photons (i.e. so the combined energy of two photons arriving together is insufficient to excite a photoelectron to cross the bandgap) but less than the combined energy of three photons. Similar considerations would apply to multi-photon detection of higher order (e.g. four-photon detection etc).

The multi-photon effect detector could be a semi-conductor device. For example, it could be a light emitting diode (LED), a photodiode, an avalanche photodiode or a laser diode. The multi-photon effect detector could comprise a semi-conductor material. Advantageously, the semiconductor material has a bandgap higher than the energy of a single photon of the gating and probe pulses. For example, the semi-conductor material could comprise silicon, GaAsP, AlGaAs, InGaAs, Ge, GaN, InGaN, InGaAsP, GaP, InGaP, GaAs or PbSe which all allow operation as a photovoltaic detector. Advantageously, the multi-photon effect detector comprises Silicon. Silicon is particularly preferred when using gating and probe pulses having optical wavelengths in the mid-infrared. For example, two-photon effect detection is possible using a silicon-based detector when the wavelength of the gating and probe pulses is greater than 1110nm and less than 2200nm. A silicon-based detector is advantageous because of the relatively low cost and simplicity of use, including the ability to operate at ambient temperatures. As an alternative to using a detector comprising semi-conductor material, it would be possible to implement multi-photon detection using fluorescent dyes (e.g. as used in multi-photon microscopy). Such devices may also be configured to have a suitable bandgap (which may also be termed an energy-gap).

The apparatus thus includes a multi-photon effect detector; i.e. a detector that is arranged within the apparatus to implement multi-photon effect detection. A number of additional components may be provided as part of the apparatus to provide or enhance the multi-photon effect. As explained above, the bandgap of the detector is preferably arranged to be appropriate for the photon energies of the gating/probe pulses. There may also be elements within the apparatus to focus the probe and gating pulses at the detector. For example, the probe and gating pulses may be focussed to at least partially overlap on the detector. Advantageously, the probe and gating pulses may be focussed (e.g. tightly focussed) at substantially the same point on the detector. In a preferred embodiment, the returned probe pulses and gating pulses may be combined (e.g. using a beam splitter) and the combined beam of returned probe pulses and gating pulses passed along a common path to the multi-photon effect detector. Alternatively, the gating pulses and returned probe pulses could be passed to the detector along separate optical paths.

The multi-photon effect detector may comprise a single detector element. In other words, the multi-photon effect detector may comprise a single pixel or a single active area. Alternatively, the multi-photon effect detector may comprise a plurality of detector elements. The plurality of detector elements may be spatially separated from one another, for example in a linear or two-dimensional array. In such an example, the train of gating pulses may be divided (e.g. using a beam splitter) and directed to each one of the detector elements. Returned probe pulses from different objects, or from different points on the same object, may then be directed to different detector elements. In this example, an electrical signal may be output for each detector element. The simultaneous measurement of multiple distances is then possible, as described in more detail below.

Advantageously, the apparatus comprises an analyser for analysing the output of the multi-photon effect detector. The analyser may analyse the output of the multi-photon effect detector as a function of time. The analyser may comprise a digitiser (e.g. an analogue-to-digital converter (ADC)) to digitise an electrical signal that is output by the multi-photon effect detector. The analyser may fit the signal intensity as a function of time to a function. For example, a Gaussian function may be fitted to the signal intensity data. The time at which gating and returned probe pulses arrived together at the detector may then be established from peaks in the digitised electrical signal. This, in turn, can allow time-of-flight distance measurements to be made. The analyser may comprise a processor to perform the signal processing and/or analysis. If the multi-photon effect detector comprises a plurality of detector elements, the signal from each of the detector elements may be analysed in this manner.

Conveniently, the apparatus includes a time-of-flight monitor. The time-of-flight monitor may include at least one peak detector. The time-of-flight monitor may include at least one timer. The at least one peak detector may thus be configured to detect peaks in the output of the multi-photon effect detector. The at least one timer may be configured to measure a time between the detected peaks. The time-of-flight monitor may comprise a processor that performs the peak detection and timing measurements. If the returned probe pulses are returned from a reference object and a target object, a time can be established between detected peaks that relates to the difference in optical path length travelled by probe pulses returned from the reference and target objects. This allows the distance between the reference object and the target object to be determined. Time-of-flight monitoring of this type is less computationally expensive and therefore potentially quicker than collecting and subsequently analysing signal intensity data as a function of time.

The optional time-of-flight monitor may include at least two timers. If probe pulses are returned from a reference object and a target object, a first timer may measure a first time interval between peaks returned from the reference object and the target object, whilst a second timer may measure a second time interval between peaks returned from the target object and the reference object. The time interval between peaks returned by the reference object may be measured. This may be done by adding the time intervals measured by the first and second timers. The time interval between peaks returned by the reference object may be used as a timing reference signal, for example to compensate for any changes in the difference in repetition rate between the probe and local oscillator combs. The use of such a timing reference signal can reduce measurement uncertainly.

The at least one optical pulse generator may comprise a plurality of optical pulse generators. Each of the plurality of optical pulses generators may generate a train of ultrashort laser pulses. Conveniently, the at least one optical pulse generator comprises a probe mode-locked laser for generating the train of probe pulses and a local oscillator (LO) mode-locked laser for generating the train of gating pulses. In other words, two separate mode-locked lasers (such mode-locked lasers also being termed frequency combs) may provide the probe and gating pulses. The trains of probe and gating pulses are preferably ultrashort laser pulses. The duration of such ultrashort laser pulses is typically of the order of picoseconds or femtoseconds. For example, the ultrashort pulses may have a duration of less than 1 picosecond. Alternatively, it is possible to derive the train of probe pulses and the train of gating pulses from a common laser cavity (e.g. a single optical pulse generator may be provided to produce both the probe and gating pulses).

Advantageously, both the probe mode-locked laser and the local oscillator mode-locked laser are so-called "free-running" mode-locked lasers. In other words, the phase of the electric field within the envelope of each pulse emitted by the lasers can vary in an unknown manner (i.e. there is no phase control loop). This is acceptable because the multi-photon effect detector does not rely on the generation of an interferogram and is thus substantially unaffected by any changes in the carrier-envelope phase offset. The ability to use separate optical pulse generators (e.g. without phase control) to produce the probe and gating pulses is a significant advantage over prior art systems.

As outlined above, multi-photon effect detection does not require there to be any optical interference of the returned and gating pulses at the detector. In fact, optical interference between the returned probe pulses and the gating pulses can decrease the performance of the apparatus. If the gating and returned pulses are allowed to optically interfere then an interferogram will be collected at the detector, but if they are combined without being allowed to interfere then the detector collects only the envelope. It is thus preferable to have the pulses temporally overlap at the detector with minimal or no optical interference. The optical configuration of the apparatus is therefore preferably arranged to substantially prevent optical interference of the gating pulses and probe pulses at the multi-photon effect detector. This allows the intensity envelope to be detected directly, without the disadvantages associated with the generation of an interference pattern.

The apparatus may include a variety of different optical components (lens, waveplates, beam-splitters, mirrors etc) that guide the various gating and probe pulses from the at least one optical pulse generator to the multi-photon effect detector. These optical components can be arranged to prevent any substantial optical interference of the gating and returned probe pulses when they reach the multi-photon effect detector. Advantageously, the gating pulses have a different polarisation state to the returned probe pulses on arrival at the multi-photon effect detector. In other words, the polarisation states of the gating and returned probe pulses can be selected to prevent or minimise optical interference. For example, the gating and returned probe pulses may be configured to have substantially orthogonal linear polarisations on reaching the detector. Alternatively, the gating and returned probe pulses may have different circular polarisations (e.g. left-hand and right-hand circular polarisation) on arrival at the detector. Optical interference effects may also be reduced or minimised by appropriate selection of the optical wavelengths of the gating and probe pulses. For example, if the optical wavelength bands of the gating and probe pulses are different (e.g. non-overlapping) then there will be no optical interference between such pulses. It would also be possible to control the angles of incidence of the gating and returned probe pulses on the multi-photon effect detector to minimise optical interference.

The probe pulses are directed to, and returned from, one or more objects. The one or more objects may include at least one reference object. Advantageously, a single reference object may be provided. Such a reference object may be provided as a part of the optical arrangement of the apparatus. For example, it may be an internal optical component of the apparatus. The reference object may be provided in a separate reference arm of the apparatus. Alternatively, the reference object may comprise a partially reflective component through which any non-reflected light passes to another (e.g. target) object. The reference object may comprise a mirror. The reference object may comprise a partially reflective (and hence partially transmissive) component, such a glass wedge or the like. The reference object generates returned probe pulses, which are herein termed reference pulses (i.e. because they are returned from the reference object). The probe pulses may be incident on the reference object along the same path as the (returned) reference pulses. The position of the reference object relative to the remainder of the apparatus is preferably invariant (i.e. it provides an invariant reference or datum position).

The one or more objects may comprise one or more target objects. A target object may have an unknown distance from the remainder of the apparatus. The one or more objects may thus comprise one or more remotely located target objects. For example, the target object(s) may be located externally to the apparatus. The target object may comprise a surface of an object that is to be measured. For example, the surface of industrial parts may be measured directly. Alternatively, the target object may be attached to another object. For example, a target mirror or retroreflector may be attached to another article that is to be measured (i.e. an indirect measurement). Each target object produces returned probe pulses, which are herein termed target pulses (i.e. because they are returned from the target object). It should also be noted that although a continuous train of such target pulses is typically returned by a target object, not all of the probe pulses that are directed at an object may be returned (e.g. some may miss the target altogether or some may be reflected in a direction that does not allow their capture). The target objects may also be moving relative to the apparatus and hence the target pulses may provide a snapshot of position. The change in measured distance over time may also be used to measure the speed of the target relative to the apparatus.

In a preferred embodiment, the one or more objects comprise a reference object and one or more remotely located target objects. In this embodiment, the returned probe pulses comprise both reference pulses returned from the reference object and target pulses returned from the one or more remotely located target objects. The difference in the arrival time of the target pulses and the associated reference pulse is related to the difference in path length for pulses being returned from the target and reference surfaces. If the reference object has an invariant position, the distance to the target object(s) can be determined from the difference in arrival time of the reference and target pulses.

The apparatus may be arranged to transmit the probe pulses through free space (e.g. air) to the target objects. Alternatively, the probe pulses could be passed to an object via a liquid, such as water. A target object may have a rough surface that disrupts the optical waveform of the probe pulses (i.e. so that the target pulses collected by the apparatus have distorted or disrupted wavefronts). Similarly, the medium through which the probe pulses pass to and from a target object may disrupt the optical wavefront of the probe pulses. For example, such disruption could result from passing the probe pulse through turbulent air. **In** some circumstances, such as those listed above, the returned probe pulses may have a low intensity (e.g. there may be a high level of probe beam attenuation). Optical amplification of the target pulses after they have returned from the target but prior to them reaching the multi-photon effect detector would also be possible to improve sensitivity. Amplification of the reference pulses could also be provided. For example, a fibre amplifier could be used. Such an amplification process can also degrade the quality of the optical wavefront. For prior art, interferogram based arrangements, such distortions of the optical wavefront would have a severe impact on the quality of the optical interference that is obtained. However, such effects have a much lower impact when using multi-photon effect detection in accordance with the present invention because it is not based on optical interference.

As outlined above, the optical probing arrangement may direct a probe beam (i.e. the train of probe pulses) to one or more objects. This may include directing the probe pulses to a single target on a single object. The apparatus can also be configured to measure multiple targets; such targets being on different objects or at different points on the same object. The optical probing arrangement may thus comprise a beam splitter that splits an input probe beam comprising the train of probe pulses into a plurality of output probe beams. The term "splits" means the optical intensity of an initial probe beam is divided into two or more output probe beams. Each of the output probe beams thus contains the full train of probe pulses, albeit at a lower intensity that the input probe beam. Each output probe beam may then be directed to one of a plurality of targets. The optical probing arrangement is preferably also configured to collect returned probe pulses from each of the plurality of targets.

In the above multi-target example, the returned probe pulses from each target may be combined into a single beam that is directed to the same point on the multi-photon effect detector as the gating pulses. In such an example, peaks in the detected signal would correspond to the returned probe pulses from each of the different targets. If the targets were at different distances, then it would be possible to separately calculate the distance to each target.

Alternatively, the multi-photon effect detector may comprise a plurality of active or detector elements (e.g. pixels or areas) as described above. In such an example, the returned probe pulses from each target may be separately directed to a different one of the plurality of detector elements. The plurality of multi-photon effect detector elements may be provided by a multi-pixel sensor array formed on a single substrate or by a plurality of physically separated multi-photon effect detector elements (such as photodiodes spatially separated from one another, for example in different arms of the apparatus). In such an example, the optical probing arrangement may also comprise an additional beam splitter that splits an input local oscillator beam comprising the train of gating pulses into a plurality of output local oscillator beams. Each of the plurality of detector elements may then receive both an output local oscillator beam and returned probe pulses from one of the plurality of targets. The multi-photon effect detection at each active element then relates to the distance of the respective target. In other words, the peaks in the signal from each active element enables the measurement of the distance to a single target. It would, of course, also be possible to direct a train of reference pulses to all, some or one of the detector elements to also provide a reference peak (e.g. to help time-of-flight calculations of distance). It should be noted that the reference peak generated from one active element may be used as a timing reference for target peaks detected using other detector elements. In other words, time-of-flight distance measurements may be performed using reference peaks detected by one active element (i.e. indicating the arrival time of the reference pulses) and target peaks detected by a different active element (i.e. indicating the arrival time of the target pulses).

The ability to measure a plurality of target distances simultaneously has a number of advantages. For example, the distance of multiple separate objects could be measured simultaneously. If multiple target points on a single object were measured simultaneously, it would also be possible to establish more information about the orientation of an object (e.g. to measure pitch, roll or yaw) or the shape of an object. Multiple points on an object could also, or alternatively, be measured in series. For example, the probe beam (i.e. the train of probe pulses) could be scanned (e.g. rastered) over the surface of an object to measure multiple points on that object. In this manner, a three-dimensional (3D) image of the object could be built up.

Advantageously, the optical distance measurement apparatus is configured for installation on a coordinate positioning apparatus, such as coordinate measuring machine (CMM). The CMM may comprise an articulated robot arm; the optical distance measurement apparatus may then act as the distance measurement component of a laser tracker. The CMM may be a bridge type CMM in which a quill is moved relative to a bed on which an object to be inspected is placed. The object may be secured to the bed of the CMM by a fixture. The optical distance measurement apparatus may have an optical head (e.g. comprising the optical probing arrangement) for emitting the train of probe pulses and/or collecting the returned pulses. The optical head may be attached to the quill of the CMM. The optical head may be attached to the quill of the CMM via a two-axis rotary probe head, such as the REVO (registered trademark) articulating probe head that is sold by Renishaw plc, Wotton-Under-Edge, Gloucestershire, UK. The at least one optical pulse generator of the apparatus may be located adjacent the CMM and connected to the optical head via one or more optical fibres.

Conveniently, the optical distance measurement apparatus may be used to calibrate machines, such as coordinate positioning apparatus. The coordinate positioning apparatus may comprise a CMM (e.g. a bridge type CMM, robot arm etc) or a machine tool etc. The apparatus may thus be temporarily mounted to a machine to perform a calibration procedure. In such an example, one or more retroreflectors or mirrors may be mounted to a movable part of the machine (e.g. multiple mirrors may be mounted to the quill or arm of a CMM). The optical distance measurement apparatus may then measure the position of the mirrors as the moveable part of the machine is moved around in space. The high accuracy position measurements collected by the optical distance measurement apparatus can then be used to correct or error map the position measurements taken by the internal measurement devices (e.g. encoders) of the machine. After calibration, the apparatus may be removed from the machine.

Alternatively, the optical distance measurement apparatus of the present invention may be incorporated into a machine. In other words, the optical distance measurement apparatus may be integrated into a machine as a position encoder or the like. This allows the relative positions of different components of a machine to be measured (e.g. as part of a machine position control loop). The optical distance measurement apparatus has the advantage of being able to measure relative position without needing to establish a datum position if power is lost and is thus particularly suited to larger machines.

Many other uses of the optical distance measurement apparatus of the present invention would also be possible. For example, it could be used in large scale length metrology applications such as: large manufacturing and assembly machines as motion control feedback elements; assembly of large production facilities including jig and fixture alignments; civil engineering to measure new constructions and monitor existing buildings for movement during adjacent ground works etc; asset management for large structures including docks, bridges, dams, embankments; general surveying; capture and modelling of historical/archaeological sites and artefacts for study, education and virtual tourism; large machines and instruments as feedback to allow control of geometry, for example large optical telescopes. The apparatus could also be used for condition monitoring of large safety critical structures and sensors for terrain/environment mapping for autonomous robots, vehicles, space (e.g. satellite tracking) and defence applications.

It should be noted that the optical distance measurement apparatus of the present invention could be used with other optical distance measurement apparatus. For example, a traditional coaxial lidar arrangement could be used in parallel with the apparatus of the present invention. The traditional lidar arrangement could provide a coarse measurement (e.g., to within a metre or two) whilst the apparatus of the present invention provides a finer (i.e., much higher resolution) measurement. The coarse measurement may thus be used to extend the ambiguity range. For example, the optical distance measurement apparatus of the present invention could use a local oscillator repetition rate of around 300MHz which would give a ranging ambiguity of approximately 1m. The standard lidar could then be used to determine which 1m increment the target is in. Such a standard lidar system would need a timing resolution of better than 3ns to achieve such a resolution, which is very straightforward for off-the-shelf lidar technology.

According to a second aspect of the present invention, there is provided a method for optical distance measurement, comprising the steps of;

(i) generating a train of probe pulses,
(ii) generating a train of gating pulses, the train of gating pulses being generated at a different repetition rate than the train of probe pulses,
(iii) directing the train of probe pulses towards one or more objects and collecting returned probe pulses returned from the one or more objects,
(iv) directing the train of gating pulses and the returned probe pulses to a detector, wherein the detector is configured to implement multi-photon effect detection. The method may also comprise any of the steps mentioned above in the context of the associated apparatus.

Also described herein is a multi-photon effect detection device comprising a multi-photon effect detector and a timestamping analyser. The timestamping analyser comprises at least one peak detector and at least one timer, the at least one peak detector being configured to detect peaks in the output of the multi-photon effect detector and the at least one timer being configured to measure a time of the occurrence of the detected peaks. The time between detected peaks may be measured to establish time-of-flight measurements of distance. The analyser may comprise a processor to provide the multi-photon effect detection and timestamping analysis. Other uses of the device would be possible.

Also described herein is a method of analysing the output of a multi-photon effect detector, comprising the steps of detecting intensity peaks in the output of the multi-photon effect detector that arise from multi-photon absorption events and measuring a time at which such detected intensity peaks occur. The time between detected peaks could be measured. In this manner, time-of-flight measurements of distance could be performed.

Also described herein is a coordinate positioning apparatus comprising an optical measurement probe for inspecting an object, wherein the optical measurement probe comprises at least one frequency comb and a multi-photon effect detector. The optical measurement probe may comprise distance measurement apparatus according to the first aspect of the present invention.

Also described herein is calibration apparatus for calibrating a coordinate positioning apparatus (e.g. a machine tool, coordinate measuring machine, robot etc), the calibration apparatus comprising at least one frequency comb and a multi-photon effect detector. The calibration apparatus may comprise distance measurement apparatus according to the first aspect of the present invention.

Also described herein is a position encoder for measuring the relative distance of two moveable components of a machine (e.g. a machine tool, coordinate measuring machine, robot etc), the position encoder comprising at least one frequency comb and a multi-photon effect detector. The position encoder may comprise distance measurement apparatus according to the first aspect of the present invention.

The invention will now be described, by way of example only, with reference to the accompanying drawings in which;

Figure 1 illustrates a prior art dual-comb distance measurement apparatus as described in US2011/0285980,

Figure 2 shows distance measurement apparatus of the present invention that includes a multi-photon effect detector,

Figure 3 shows a variant to the apparatus of figure 2 that includes a separate reference surface arm,

Figure 4 shows the reference and target pulses present in the two-photon signal,

Figure 5 shows one pair of target and references pulses of figure 4, with the inset showing the target pulse in more detail,

Figure 6 shows distance measurement apparatus for acquiring both two-photon and interferogram based measurements,

Figure 7a shows a two-photon pulse and figure 7b an interferogram signal,

Figure 8 illustrates how variations in the interference patterns within interferograms can lead to uncertainties in establishing the envelope centre,

Figure 9 shows the effect of the pulses repetition rate on interferometric and two-photon based measurements,

Figure 10 shows distance measurement apparatus that includes a return signal,

Figure 11 shows distance measurement apparatus for the simultaneous measurement of multiple targets, and

Figure 12 shows distance measurement apparatus having a microcontroller for timing the occurrence of two-photon events,

Figure 13 is experimental data showing the Allan deviation as a function of averaging time of measurements taken using apparatus of the present invention,

Figure 14 shows distance and residual errors of measurements taken using apparatus of the present invention,

Figure 15 shows a further embodiment of the distance measurement apparatus of the present invention,

Figure 16 shows a further embodiment of the distance measurement apparatus of the present invention,

Figure 17 shows a variant to the arrangement of figure 16 that include two lidar timers,

Figure 18 shows the timing information extracted using the two lidar timers of figure 17,

Figure 19 shows a variant to the arrangement of figure 17 in which a timing signal is extracted from the lidar timers, and

Figure 20 shows a variant to the arrangement of figure 19 in which a timing reference is extracted using high-speed photodiodes.

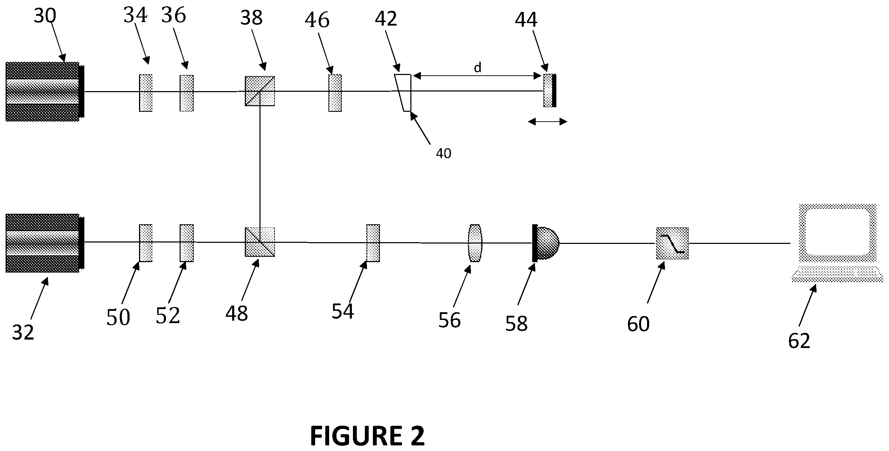

Referring to figure 2, a distance metrology apparatus of the present invention is illustrated. The apparatus includes a probe comb 30 and a local oscillator (LO) comb 32. The probe comb 30 and LO comb 32 are both SESAM mode-locked, erbium-fibre lasers. The output of these lasers can be viewed in the time domain as a train of ultrashort pulses separated by $1/f_{rep}$ (where $f_{rep}$ is the repetition rate of the laser) or in the frequency domain as a regularly spaced frequency comb. In this embodiment, the probe comb 30 has a repetition rate of 78.87MHz and the LO comb 32 has a repetition rate of 78.874MHz. The laser outputs have a wavelength of 1557nm, are optically amplified to 20mW (from 3mW) and the generated pulses have unknown polarisations.

The train of probe pulses from the probe comb 30 have unknown polarisation and are thus passed through a first quarter-wave plate 34 and a first half-wave plate 36 to provide polarisation control. In particular, the probe pulses leave the first half-wave plate 36 with p-polarisation so that they are transmitted through a first polarising beam splitter cube (PBS) 38. The train of probe pulses are then (partially) reflected from a reference (back) surface 40 of a glass wedge 42 and also from the surface of a target mirror 44. This produces trains of reflected pulses from both the glass wedge 42 and from the target mirror 44; these returned pulses can be termed reference pulses and target pulses respectively. The optical path is configured so that the probe pulses pass through a second quarter-wave plate 46 on both their way to the reference and target surfaces and on their return to the polarising beam splitter cube (PBS) 38. This double pass of the probe pulses through the second quarter-wave plate 46 transforms the pulses to s-polarisation so that they are reflected at the PBS 38 toward the second polarising beam splitter cube (PBS) 48.

The LO comb 32 produces a train of gating pulses that also have unknown polarisation. The gating pulses from the LO comb 2 are passed through a third quarter-wave plate 50 and a second half-wave plate 52 which are arranged to give the gating pulses p-polarisation when they arrive at the second polarising beam splitter cube (PBS) 48. It can thus be seen that the reflected (probe) pulses meet the gating pulses at the second PBS 11 with orthogonal linear polarisations. The use of orthogonal polarisation prevents any interference of the probe and gating pulses.

The trains of probe and gating pulses are passed through a 1300nm optical long pass (high pass) filter 54 to block any unabsorbed pump light from the combs and any stray light which may enter the instrument through the probe light channel that the photodiode 58 is sensitive to. The trains of probe and gating pulses are then focussed by a lens 56 onto a Silicon photodiode 58. The photodiode 58 is selected to have a bandgap which is more than $hc/\lambda$ and less than $2hc/\lambda$, where h is Planck's constant, c is the speed of light and $\lambda$ is the wavelength of the combs. In this example, the bandgap of the silicon photodiode 58 is 1.11eV. The detector bandgap is thus larger than the photon energies of the laser radiation produced by the frequency combs, which means the detector is insensitive to the single photons generated by the frequency combs. However, a probe pulse focussed onto the photodiode 58 will induce a peak in the two-photon absorption signal if it temporally coincides with a gating pulse. In particular, a detected signal will be generated which is proportional to $I(t)I(t-\tau)$, where $\tau$ is the instantaneous delay between the two pulses (i.e. the delay between the probe and gating pulses). The two-photon absorption effect has a quadratic response to the input power, which means that when a gating pulse (i.e. a photon from the LO comb) temporally coincides to a sufficient extent with a probe pulse (i.e. a photon from the probe comb) the photodiode will produce a detectable signal.

The signal detected by the photodiode 58 is passed through an electronic low-pass filter 60 before being displayed on a digitizer 62 or oscilloscope. It should be noted that the low-pass filtering could alternatively be performed in software or even mechanically. The low pass filter 60 is chosen with a cut-off frequency of about half of the probe comb repetition rate so that the pulse repetition frequency is filtered out. This could also be achieved with an electronic bandpass filter at an appropriate frequency. In this example, a Silicon (Si) photodiode is used to collect the two-photon signal however, as already discussed, there are many alternatives. Any photosensor device having a bandgap greater than the single photon energies but less than two times the photon energies can be used for two-photon detection. For example, it would be possible to use a photodiode, an avalanche photodiode, a light emitting diode (LED), a laser diode used in reverse, a photocathode or a photomultiplier etc.

It is important to note again that the two-photon effect used to detect the substantially simultaneous arrival of the probe and gating pulses is not an interference-based effect. The two-photon absorption effect is polarisation-independent and non-phase matched. The combination of laser pulses with opposite polarisations means their phases cannot interact, so there is no interference and only the envelope of the resultant intensity profile is detected. This is important because the detected signal is then insensitive to changes in the carrier-envelope-offset frequencies ($f_{CEO}$) of the combs.

The apparatus described with reference to figure 2 is just one example of how to implement the principle of nonlinear two-photon detection in a dual comb distance measurement apparatus. Several variations to apparatus will now be described that can be used to implement the same principle.

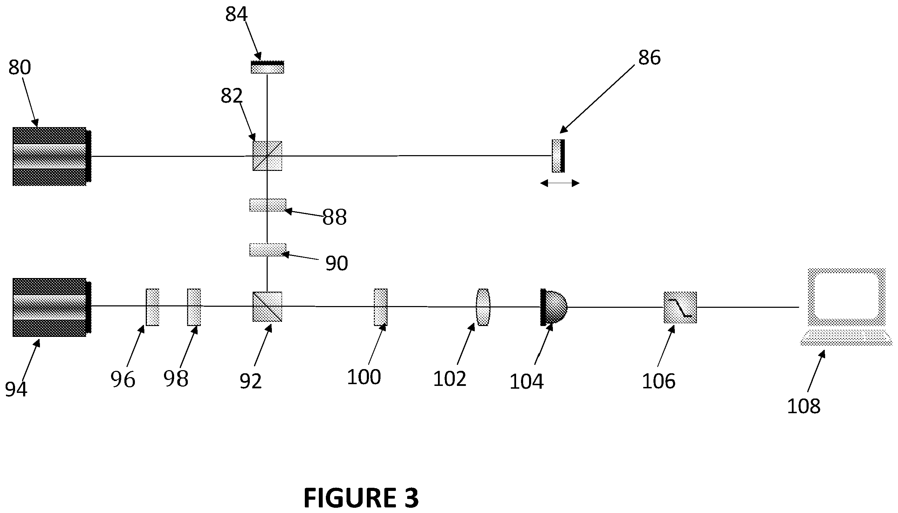

Referring to figure 3, an example of an alternative optical arrangement is described. A probe comb 80 generates a train of ultrashort probe pulses that are split into two paths by a (non-polarising) beam splitter 82. The probe pulses directed along the first path are reflected from a fixed-position reference mirror 84 and a train of reference pulses (i.e. probe pulses reflected from the reference mirror 84) are directed back to the beam splitter 82. The probe pulses directed along the second path are reflected from the target surface of a moveable mirror 86 and a train of target pulses (i.e. probe pulses reflected from the moveable mirror 86) are directed back to the beam splitter 82. The trains of target and references (probe) pulses are recombined at the beam splitter 82 before passing through a quarter-wave plate 88 and half-wave plate 90 arranged to give the returned probe pulses s-polarisation when they arrive at the polarising beam splitter 92.

A LO comb 94 generates a train of ultrashort gating pulses that are passed through a further quarter wave plate 96 and a half-wave plate 98 that are arranged to give the LO pulses p-polarisation. The arrangement is configured so that the (s-polarised) probe pulses and the (p-polarised) gating pulses meet at the polarising beam splitter cube 92 with opposite polarisations. As in the example outlined with reference to figure 2, this prevents any substantial optical interference between the gating and probe pulses. The combined probe and LO beams are directed from the beam splitter cube 92 to a long pass filter 100 (again to block any unabsorbed pump light from the combs) and are focussed by a lens 102 onto a silicon photodiode detector 104. The detected electrical signal from the detector 104 is fed through a low pass filter 106 to remove the pulse train from the signal and transmit only the envelope signal. The signal is then viewed on a digitizer 108. In this embodiment, the reference and target reflections (i.e. the probe and LO pulses arriving at the detector 104) have equal optical power and so the detected envelopes have equal amplitude. The arrangement of figure 3 can thus be beneficial when using low power beams (i.e. because the reflection from the glass wedge 42 in the arrangement of figure 2 is weaker than the reflection from the mirror 84).

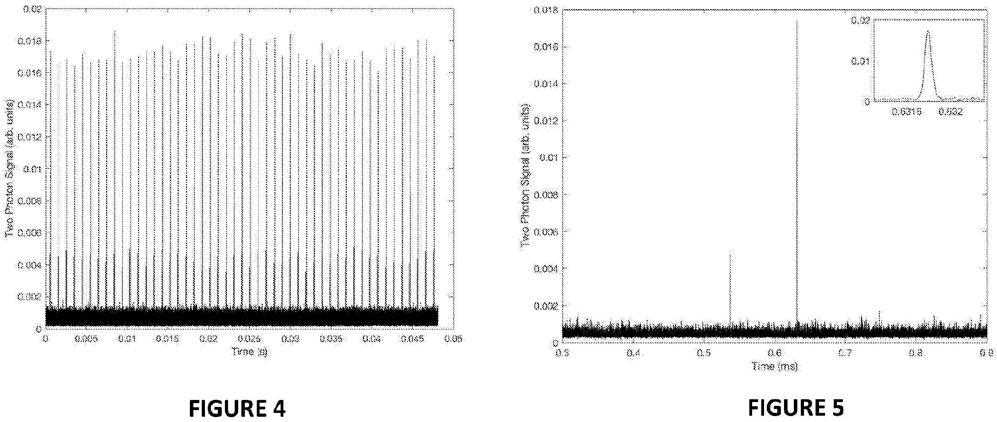

Referring to figures 4 and 5, there is shown an example of raw data collected using the distance measuring apparatus described with reference to figure 2. In particular, figures 4 and 5 show the filtered electrical signal from the photodiode 58 of such apparatus as a function of time.

In figure 4, a sequence of multiple pairs of envelopes are shown. Each peak in the intensity signal arises from the two-photon absorption effect that occurs when a gating pulse and a probe pulse arrive together at the detector. The peaks from the target and reference envelopes are almost overlaid in figure 4 but the lower amplitude envelopes (i.e. arising from the reflection of probe pulses off the glass wedge 42) and the higher amplitude envelopes (i.e. generated from the reflection of probe pulses off the target 44) are still visible.

Figure 5 show a (temporally) expanded view of the first pair of envelopes shown in figure 4. The lower intensity peak on the left arises from the reference pulses returned from the glass wedge 42 whereas the higher intensity peak on the right is due to the target pulses returned from the target 44. The inset to figure 5 is a further (temporally) expanded view of the intensity peak that arises from the target pulses.

The delay in arrival time between the reference envelope and the target envelope depends on the distance between the glass wedge 42 (i.e. the reference) and the target mirror 44. A time-of-flight distance measurement (i.e. to measure the distance between the reference and the target) can thus be made by identifying the delay in arrival time of the reference and target envelopes. A variety of different techniques could be used to establish the delay in arrive time. For example, the centre point of each envelope (i.e. each intensity peak) could be derived by fitting the envelopes to a function, Fourier transform shift analysis could be used to find the time delay etc. However, given the sufficiently narrow and well-defined envelopes, it has been found adequate to simply use the position of the peak value. This can greatly simply the data processing that is required, compared to the complex analysis required when using interferometric based techniques.

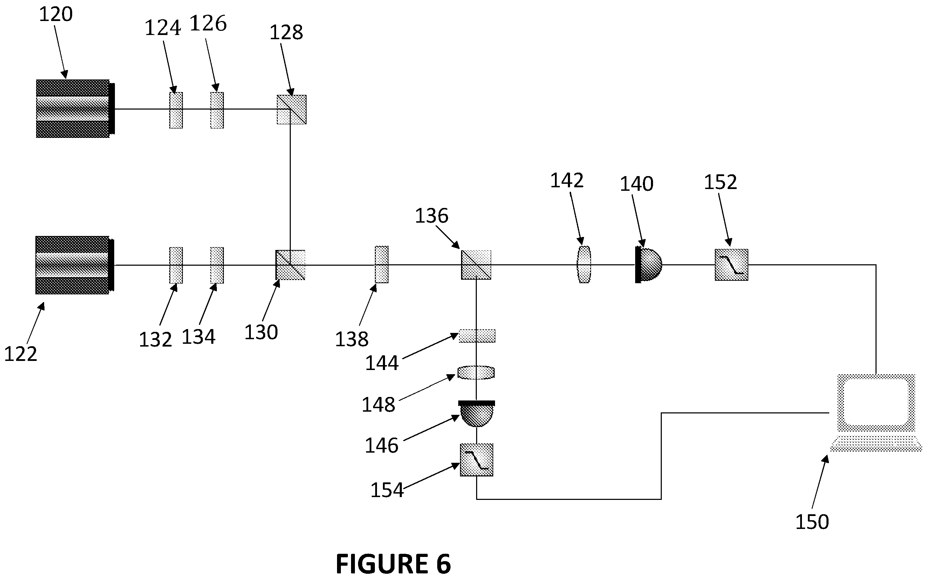

Referring next to figures 6 to 9, there will be presented a comparison of the interferometric techniques of the prior art with the multi-photon effect detection technique of the present invention.

Figure 6 illustrates apparatus that allows the comparison of interferometric and multi-photon effect detection dual comb metrology.

A probe comb 120 and a LO comb 122 provide near-identical trains of probe and gating pulses. As described above, probe and LO combs operate at very slightly different repetition rates. The train of probe pulses from the probe comb 120 pass through a quarter-wave plate 124 and a half-wave plate 126 that are configured to give the probe pulses s-polarisations. The s-polarisation probe pulses are then reflected from an appropriately arranged first polarising beam splitter 128 towards a second polarising beam splitter 130. The train of gating pulses from the LO comb 122 pass through a quarter-wave plate 132 and a half-wave plate 134 that are arranged so that the gating pulses are p-polarised when arriving at the second polarising beam splitter 130. The trains of pulses from the probe comb 120 and the LO comb 122 therefore meet at the second polarising beam splitter 130 with opposite polarisations.

The combined train of probe and gating pulses are passed from the second polarising beam splitter 130 to a non-polarising beam splitter 136 via a 1300nm optical long pass filter 138 that eliminates any unabsorbed pump light. The combined pulse beams are split in two by a (non-polarising) beam splitter 136. The transmitted beam is passed to a two-photon detection branch of the apparatus, whilst the reflected beam is directed to an interference-based detection branch. The transmitted beam is focussed onto a Silicon photodetector 140 by a lens 142. The silicon photodetector 140 is configured for two-photon detection, as per the apparatus described above with reference to figures 2 and 3. The reflected beam passes through a polariser 144 to give both the probe and gating pulses matching polarisations, before they are focussed onto an Indium Gallium Arsenide (InGaAs) photodetector 146 by a lens 148. The Indium Gallium Arsenide (InGaAs) photodetector 146 has a bandgap that enables (single-photon) detection of the incident light. In particular, the photodetector 146 is able to collect the interference pattern formed by the concurrent arrival of the probe and gating pulses of the same polarisation.

The electronic signals from the (two-photon) detector 140 and the (single-photon) photodetector 146 are received by a digitiser 150 after being passed through electronic low pass filters 152 and 154 respectively. The digitiser 150 thus receives a two-photon signal from the Silicon photodetector 140 and a one-photon signal from the InGaAs photodetector 146. As described above with reference to figure 3-5, the two-photon signal provides a sequence of intensity envelopes that are formed due to the multi-photon absorption process (i.e. there is no reliance on interference effects). In contrast, the signal from the InGaAs photodetector 146 provides a matching sequence of interferograms (i.e. the intensity patterns that result from the optical interference of gating and probe photons).

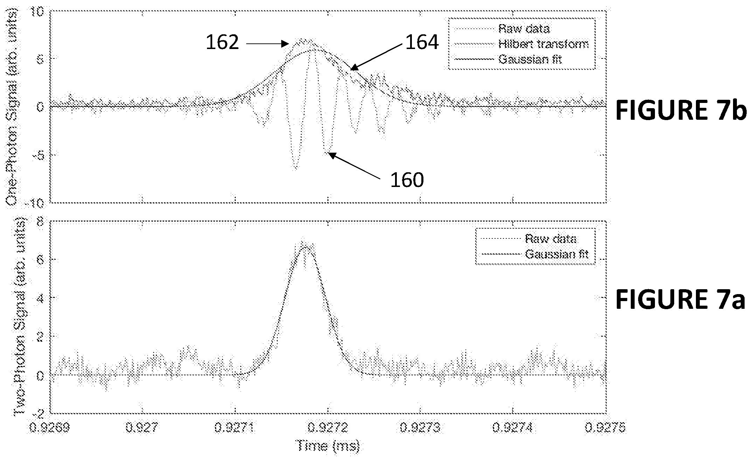

Figures 7a and 7b show data collected using the apparatus described above with reference to figure 6. Figure 7a shows the data collected from the silicon photodetector 140 (i.e. the two-photon data) and figure 7b shows the data collected simultaneous from the InGaAs photodetector 146 (i.e. the single-photon or interferometric data).

Referring to figure 7a, it can be seen that the raw data collected using the nonlinear two-photon detection technique (i.e. using photodetector 140) readily fits to a Gaussian function. The centre of the intensity peak can thus be readily extracted.

Figure 7b shows the interferogram collected using the InGaAs photodetector 146. As per the prior art systems described above, the raw data (plotted as line 160) is an interferogram in which the time dependence of the electric field can be seen. As explained above, a Hilbert transform is required to derive the envelope of the interferogram (curve 162) before a Gaussian function (curve 164) is fitted to the Hilbert transform. This Gaussian fit allows the centre point of the interferogram to be estimated.

Figures 7a and 7b demonstrate some of the advantages of using nonlinear two-photon effect detection in accordance with the present invention. Firstly, nonlinear two-photon effect detection has been found to directly collect the intensity envelope, removing the need for a Hilbert transform. Avoiding the need for a Hilbert transform simplifies the data analysis process and the risk of inaccurate derivation of the envelope is reduced. The second advantage arises from the strongly nonlinear response of the two-photon detection process. The full width at half maximum of the Gaussian fit of the interferogram of figure 7b is 0.1ms, whereas the full width at half maximum of the Gaussian fit of the envelope of figure 7a is just 0.05ms. The quadratic response of the two-photon absorption process can thus be seen to result in an envelope with a peak with a much greater prominence. This facilitates higher precision determination of the centre point of the peak compared with the analysis of the equivalent interferogram.

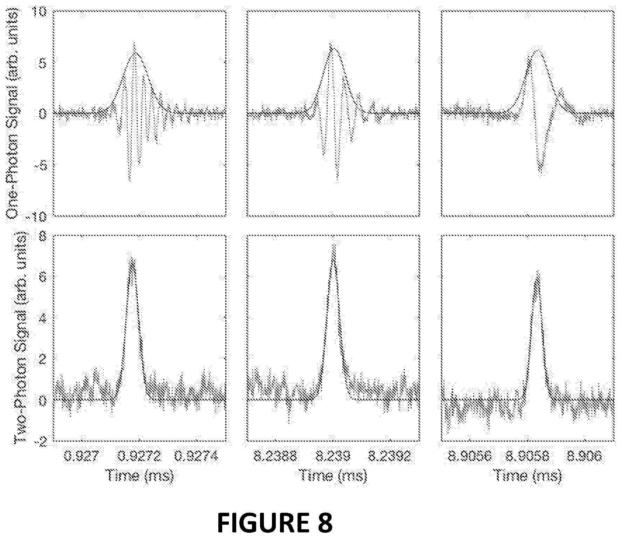

Referring next to figure 8, further advantages of using two-photon detection will be explained. As mentioned above, it should be remembered the probe comb 120 and LO comb 122 of the apparatus described with reference to figures 6 are free-running mode-locked lasers. The time dependence of the electric field associated with a light pulse generated by such a mode-locked laser can be described as a fast sinusoidal oscillation, called the carrier, multiplied by a more slowly varying envelope function. When the pulse propagates through a medium, the relative position between the carrier wave and envelope will typically change. In a mode-locked laser, a pulse train is usually generated from a single pulse circulating in the laser resonator. Every time this pulse hits the output coupler, an attenuated copy of it is emitted as the laser output. Typically, there is a certain change in the carrier-envelope offset phase in each round trip, which can be hundreds or thousands of radians. Therefore, each emitted pulse can have a different carrier-envelope phase. As described above, in prior art dual comb systems that rely on interferogram analysis it is necessary to provide a phase control loop to maintain an invariant offset in the carrier-envelope phase of the pulses that are generated by the two combs. This requirement for locking the carrier-envelope-offset frequencies ($f_{CEO}$) of the two combs is complex to implement and has been found to be impractical for industrial applications. The use of free running combs, which is possible using two-photon detection, can thus have significant benefits.

Referring to figure 8, three interferograms (i.e. one-photon signals) generated by the InGaAs photodetector 146 are shown in the uppermost plots. Three envelopes (i.e. two-photon signals) generated by the Si photodetector 140 are shown in the lowermost plots. Each one-photon signal (interferogram) was collected simultaneously with the two-photon signal (envelope) shown immediately beneath it. The associated pairs of envelopes/interferograms were collected at three separate times.

The phase of the interferograms (i.e. in the upper plots) is different at different points in time because free-running combs were used to generate the probe and LO pulse trains. In other words, the carrier-envelope-offset frequencies ($f_{CEO}$) of the two combs varied in an uncontrolled manner. The first interferogram (on the left-hand side) can be seen to have multiple fringes, the second (middle) interferogram has fewer fringes whilst the third interferogram (on the right-hand side) has very few fringes. The quality of the Gaussian fit, and hence the accuracy of any timing measurements, will thus vary depending on the uncontrolled changes in the carrier-envelope phase of the two frequency combs. In particular, the example showing only a few fringes illustrates the risk of obtaining a poorly defined interferogram at certain points in time. It is probable that the data analysis technique used to determine the mid-point of the interferogram envelope will provide a lower accuracy distance measurement using such a poorly defined interferogram, compared with an interferogram that includes multiple fringes.

In contrast to the interferograms, the envelopes that were collected via nonlinear two-photon detection can be seen to be unaffected by the changing carrier-envelope phase of the frequency combs. This is because the multi-photon absorption effect is not an interference effect. Nonlinear two-photon detection therefore has an inherent advantage over the traditional dual-comb metrology technique that relies on extracting the envelope of an interference pattern. With nonlinear two-photon detection, the requirement for fully stabilized combs is removed because the phase of the combs is inconsequential to the detected signal. The use of nonlinear two-photon detection is thus a much simpler and more elegant solution than the optical cross-correlation or balanced cross-correlation techniques described above that others have used previously in an attempt to overcome the need to use phase stabilized frequency combs.

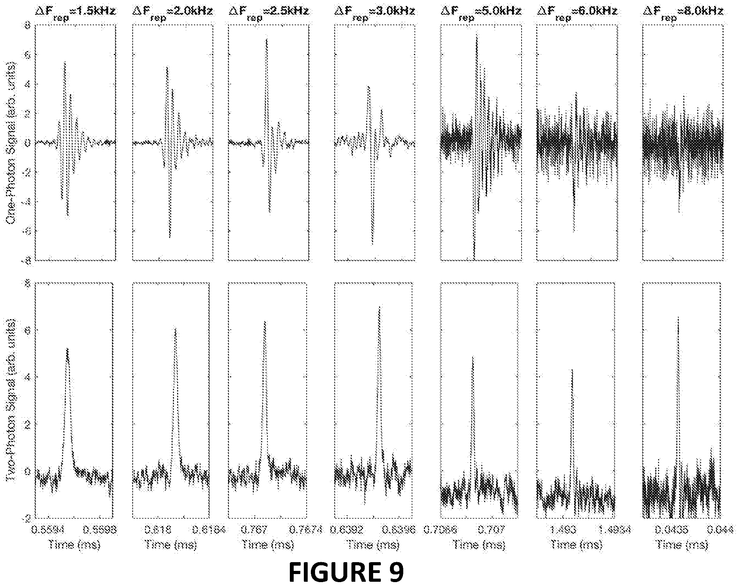

Referring next to figure 9, seven pairs of interferograms (the uppermost graphs) and two-photon detection envelopes (the lowermost graphs) are shown. Each interferogram was collected simultaneously with the two-photon detection envelope shown beneath it. Each pair of simultaneously collected interferogram and envelope data was acquired using the difference in probe/LO repetition rate ($\Delta f_{rep}$) indicated above the relevant interferogram plot.

As explained above, the $\Delta f_{rep}$ value determines the rate at which the LO pulses gate the probe pulses (i.e. the beat frequency). Generally, for prior art dual-comb metrology based on photon interference effects, a lower $\Delta f_{rep}$ value corresponds to a higher effective optical sampling rate, which assists in generating well-defined interferograms for high precision data analysis. Whereas a higher $\Delta f_{rep}$ value corresponds to a faster update rate (the update rate, $T_{update}$ being equal to the reciprocal of $\Delta f_{rep}$.) and thus allowing fast scanning of the measurement distance. The selected value of $\Delta f_{rep}$ thus imposes a trade-off between precision and update rate in prior art (interference based) dual-comb metrology. However, in conventional dual-comb metrology, the value of $\Delta f_{rep}$ is ultimately constrained by the aliasing limit to avoid distortion of the signal. In particular, the aliasing limit ($\Delta f_{lim}$) is equal to:

$$\Delta f_{lim} = \frac{f_{rep}^2}{2\Delta \upsilon} \qquad (1)$$

where $f_{rep}$ is the pulse repetition rate of the probe comb, and $\Delta \upsilon$ is the frequency bandwidth of the combs. The frequency bandwidth ($\Delta \upsilon$) is given by:

$$\Delta \upsilon = \frac{c.\Delta \lambda}{\lambda_0^2} \qquad (2)$$

where c is the speed of light, $\Delta \lambda$ is the optical bandwidth of the combs and $\lambda_0$ is the centre wavelength.

In the present example, the repetition rate of the probe laser is 78.87MHz, the centre wavelength is 1557nm and the optical bandwidth (i.e. the absolute full width of the pulses) is approximately 15nm, making the aliasing limit roughly 1.7kHz.

Figure 9 clearly shows the shapes of the interferograms becoming less defined for increasing $\Delta f_{rep}$ and the interferograms becoming distorted as $\Delta f_{rep}$ exceeds the approximate aliasing limit. However, the envelopes, collected simultaneously by nonlinear two-photon detection, are consistent in shape with increasing $\Delta f_{rep}$ and remain well-defined even beyond the aliasing limit. Thus, using non-linear two-photon detection, the update rate can exceed the above described aliasing limit, without compromising measurement precision. It should be noted that there does exist a limiting value of $\Delta f_{rep}$ for non-linear two-photon detection, beyond which the probe and LO pulses walk through each other too quickly and generate a less well-defined envelope. However, for any comb pair used in dual-comb metrology, this value will be greater than the limit of the prior art (interference based) technique.

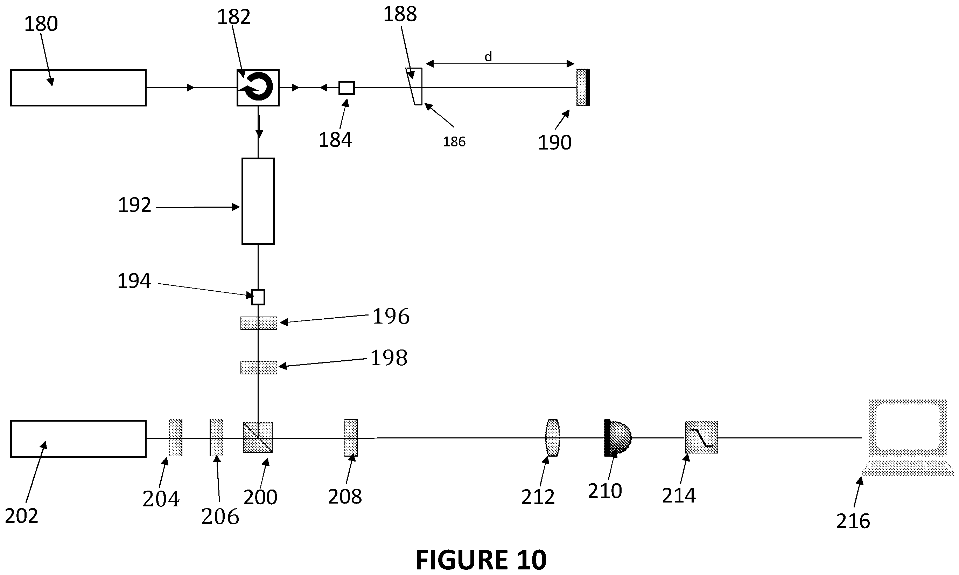

Referring next to figure 10 an alternative embodiment of the present invention is illustrated for measuring distances through turbulent media and/or to uncooperative targets.

A train of ultrashort probe pulses from the probe comb 180 are fibre coupled into a fibre circulator 182. The probe pulses leave the fibre circulator 182 via a first fibre collimator 184. The probe pulses are partially reflected from the (rear) reference surface 186 of a glass wedge 188 and also from the target mirror (or rough target) 190. The returned or reflected probe pulses (i.e. pulses reflected from the reference surface 186 and the target mirror 190) are coupled back into the fibre circulator 182 via the first fibre collimator 184. These reflected pulses pass through a fibre amplifier 192 before leaving the fibre via the second fibre collimator 194. The reflected train of pulses pass through a quarter-wave plate 196 and a half-wave plate 198 which are optimised to give the pulses s-polarisation when they reach a polarising beam splitter 200. The LO comb 202 generates a train of ultrashort gating pulses which pass through a quarter-wave plate 204 and a half-wave plate 206 that are optimised to give the pulses p-polarisation when they arrive at the polarising beam splitter 200. The pulses from the probe comb 180 and the LO comb 202 therefore meet at the polarising beam splitter 200 with orthogonal polarisations.

The combined train of probe and gating pulses that exit the polarising beam splitter 200, pass through an optical high pass filter 208 (to remove any unabsorbed pump light from the combs) and are focussed on to an Si photodetector 210 by a lens 212. As described above, the Si photodetector 210 provides a two-photon effect detector. The electrical signal generated by the photodetector 210 is passed through an electronic low pass filter 214 to remove the pulse train components and observed on a digitizer or oscilloscope 216.

The embodiment described with reference to figure 10 is advantageous because it enables the reflected (returned) probe signals to be optically amplified. This allows lower intensity probe pulses to be directed to targets and/or means the reflectivity of the target can be lower than would otherwise be possible. The use of optical amplification of the reflected probe pulses would typically not be possible in interferometric based systems, where any such amplification would alter the wavefront quality and disrupt the carrier-envelope phase properties of the reflected probe pulses. The two-photon detection arrangement is, however, unaffected by any such disruptions to the phase properties of the ultrashort pulse.

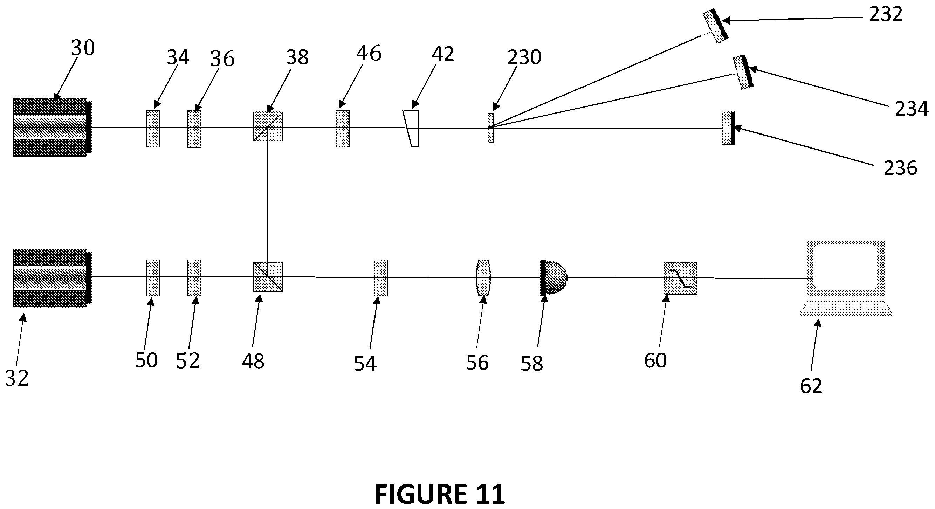

Referring next to figure 11, a variant of the apparatus described with reference to figure 2 will be described that allows the parallel determination of the distances to multiple targets. Components of the apparatus that are also present in the apparatus of figure 2 are given like reference numerals.

In common with the arrangement of figure 2, probe pulses generated by the probe comb 30 are p-polarised by being passed through the first quarter-wave plate 34 and the first half-wave plate 36. The train of p-polarised probe pulses pass through the first polarising beam splitter 38 and the second quarter-wave plate 46 before being partially reflected by the reference surface of the glass wedge 42. The pulse train that passes through the glass wedge 42 passes through a dispersive optical element (DOE) 230 that disperses (splits) the target beam into three target beams. Each of the three target beams is reflected from one of the first, second and third target mirrors 232, 234 and 236. It would also be possible to use retroreflectors instead of mirrors, thereby maintaining the polarisation state of the probe pulses. Reflections from the glass wedge 42 (i.e. reference pules) and from each of the three target mirrors (i.e. three trains of target pulses) pass again through the quarter-wave plate 46, thereby giving all returned pulses s-polarisation. The s-polarised reflected pulses meet the p-polarised gating pulses at the second polarising beam splitter 48 and the combined beams are focussed on to the Si photodetector 58 by the lens 56. The electronic signal from the detector 58, after being low pass filtered, is passed to the digitizer 62.

The three trains of target pulses (i.e. one reflected from each of the three target mirrors 232, 234 and 236) and the train of reference pulses (i.e. from reflection off the wedge 42) are gated by the train of gating pulses. As explained above, peaks in the detected intensity signal arise when a gating pulse and a probe pulse arrive together at the detector. In this arrangement, a set comprising four peaks or envelopes is repeated in sequence. Each set of four envelopes comprises a reference envelope (i.e. arising from the reflection of probe pulses off the glass wedge 42) and three target envelopes (i.e. generated from the reflection of probe pulses off each of the three targets 232, 234 and 236). The difference in arrival time of each target envelope relative to the reference envelope allows the distance to each of the three targets to be measured. It should be remembered that the use of three target beams described above is merely an example and it would, of course, be possible to implement a similar arrangement with a different number of target beams.

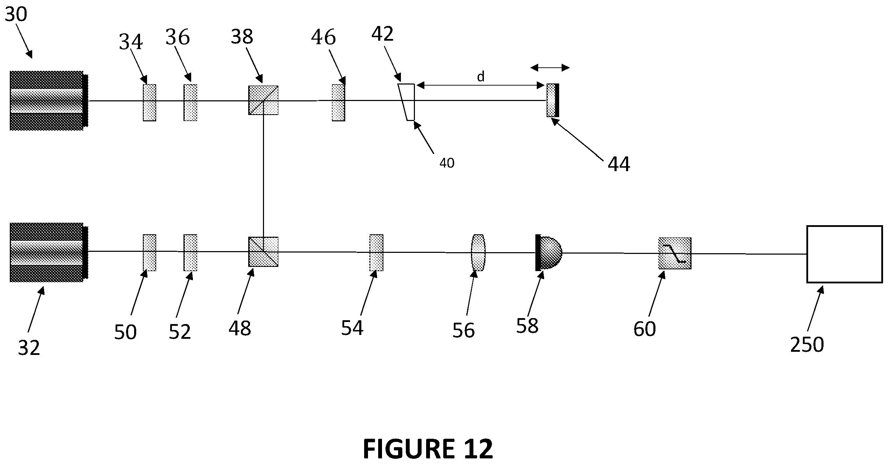

Referring next to figure 12, a variant of the apparatus described with reference to figure 2 will be described. The optical arrangement is identical to that described with reference to figure 2, but the electrical signal generated by the photodiode 58 is analysed using a timer-based arrangement instead of using a signal digitiser.

In particular, figure 12 shows a microcontroller 250 that receives the electrical signal from the photodetector 58, after it is passed though the electrical low pass filter 60. The microcontroller 250 includes first and second timers and is able to detect, in real time, the sharp rising and/or falling edges of an intensity envelope that occurs with two photon effect detection. The arrival of a (first) reference envelope is detected by the microcontroller 250 which starts the first timer. The detection of a (first) target envelope stops the first timer and starts the second timer. The arrival of each subsequent envelope stops the running timer and starts the other timer. The durations recorded by the first and second timers provide the time-of-flight of the distance between the reference and target optics. The result is a simple, real-time lidar system.

In this arrangement, it is the nonlinear response of two-photon detection which means the envelopes have a steep rising slope that can be readily detected (i.e. to start/stop the timers). A variation of traditional lidar using a dual-comb set-up is thus also provided. The rising slope of envelopes produced by two-photon detection are steeper than the rising slopes of the single pulses typically detected in lidar, thereby providing higher resolution range measurements. The use of such a timer-based system may also be preferable in some instances to the data analysis performed by the digitiser 62 used in the apparatus described above with reference to figure 2.

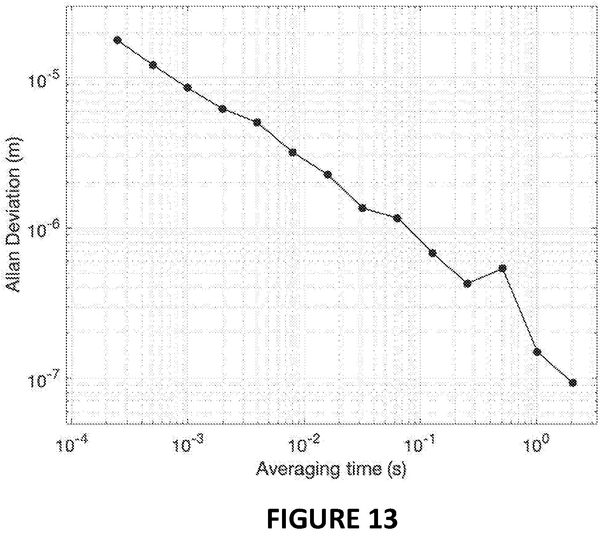

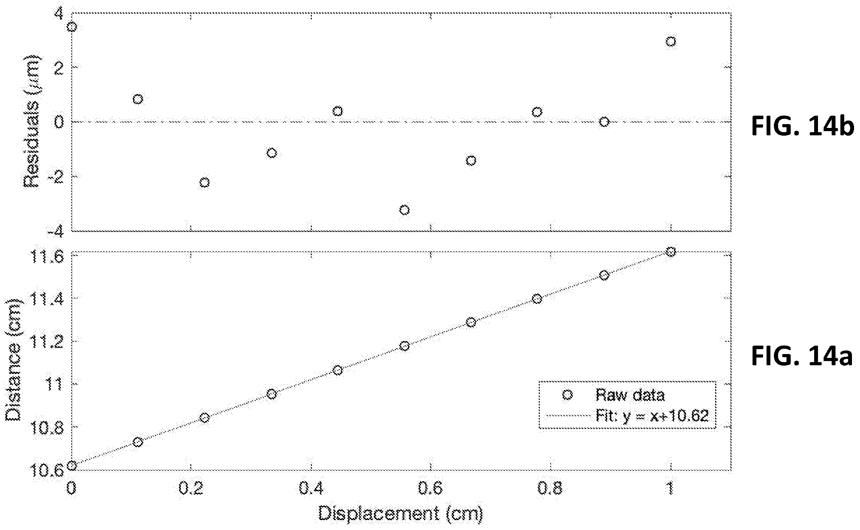

Referring next to figure 13, 14a and 14b, the results of experiments conducted using distance metrology apparatus in accordance with the present invention will be described.

Referring first to figure 13, an apparatus as described above with reference to figure 2 was used to measure the distance between a reference object and a target object that were spaced approximately 12cm apart. Many measurements of the distance were taken. Figure 13 shows the Allan deviation (precision) of the measurement versus averaging time.

As described above, the update rate is equal to the difference in the comb repetition rates ($\Delta f_{rep}$) which was 4kHz. For the minimum acquisition time of 250$\mu$s (set by the 4kHz difference in the repetition rates) the measurement precision is 17.8$\mu$m. The precision scales as the square root of the number of samples, reaching sub-$\mu$m precision for 0.1s of averaging. After 1s of averaging, the precision reaches 150nm which is sufficient to hand over the measurement to interferometry with a 633-nm HeNe laser. After 2s of averaging, the precision reaches 93nm which is below the $10^{-7}$ uncertainty limit imposed by atmospheric fluctuations.

Referring to figure 14, a second experiment was performed, again using the apparatus described above with reference to figure 2, to test the linearity and accuracy of the metrology technique. The target mirror was mounted on a translation stage and the distance to the target mirror was measured at discrete steps over a 1cm translation. Measurements were recorded with 0.5s of averaging. A Renishaw XL-80 interferometry system also measured the translation of the mirror to provide ground truth data.

Figure 14a shows the measured distances versus the truth data and shows a linear relationship. Figure 14b shows the residuals of the measured values to the fitted straight line, suggesting the technique has an accuracy of $\pm 4\mu$m.

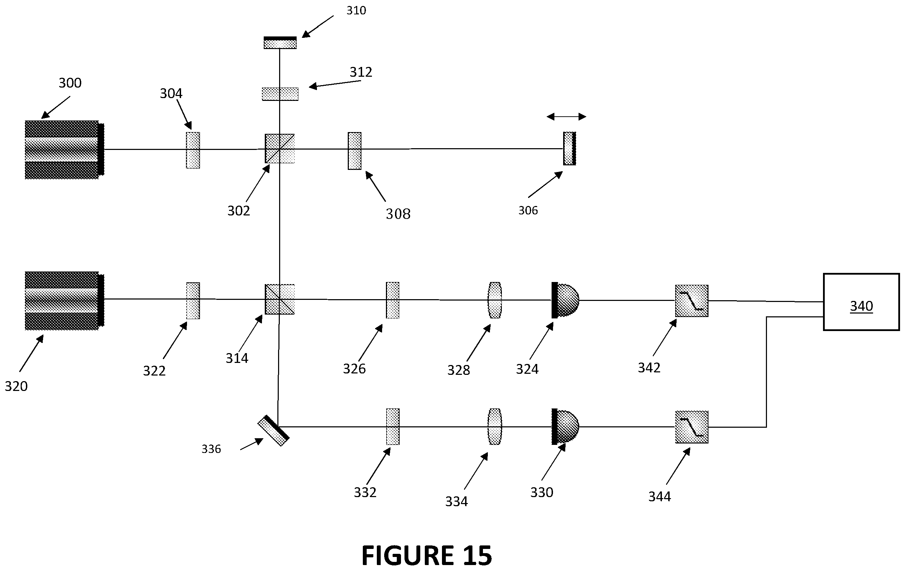

Referring to figure 15, a further alternative configuration of distance metrology apparatus of the present invention will be described. As explained below, this embodiment efficiently uses the available laser power and has separate paths for the detection of reference and target pulses. A probe comb 300 generates a train of ultrashort probe pulses (i.e. forming a probe beam) that are passed to a first polarising beam splitter 302 via a first polarisation rotator 304. The first polarisation rotator 304 is, in this example, a mechanically rotatable half-wave plate but it could alternatively comprise a liquid crystal cell or other suitable means for polarisation control.

The p-polarised component of the probe beam passes through the first polarising beam splitter 302 and is directed along a first path towards a target mirror 306 via a first quarter wave-plate 308. The s-polarised component of the probe beam is reflected by the first polarising beam splitter 302 and is directed along a second path towards a reference mirror 310 via a second quarter wave-plate 312. The probe pulses reflected from the target mirror 306 (i.e. a train of target pulses) and the probe pulses reflected from the reference mirror 310 (i.e. a train of reference pulses) return to the first polarising beam splitter 302 where they are combined into single beam (i.e. a train of returned pulses) that is directed towards a second polarising beam splitter 314.

A LO comb 320 generates a train of ultrashort gating pulses (i.e. forming an LO beam) that are passed through a second polarisation rotator 322 in the form of a mechanically rotatable half-wave plate (noting this could alternatively comprise a liquid crystal cell or other suitable means for polarisation control) towards the second polarising beam splitter 314.

The p-polarised component of the LO beam passes through the second polarising beam splitter 314 towards a first silicon photodiode detector 324. The s-polarised component of the probe beam (i.e. the train of target pulses) are reflected by the second polarising beam splitter 314 and thus also directed towards the first silicon photodiode detector 324. For the reasons outlined above, a high pass optical filter 326 and a lens 328 are provided between the second polarising beam splitter 314 and the first silicon photodiode detector 324. It can thus be seen that orthogonally polarised target pulses and gating pulses arrive at the first silicon photodiode detector 324.

The s-polarised component of the LO beam is reflected from the second polarising beam splitter 314 and directed towards a second silicon photodiode detector 330. The p-polarised component of the probe beam (i.e. the train of reference pulses) is transmitted through the second polarising beam splitter 314 and also directed towards the second silicon photodiode detector 330. For the reasons outlined above, a high pass optical filter 332 and a lens 334 may be provide between the second polarising beam splitter 314 and the second silicon photodiode detector 330. A beam steering (turning) mirror 336 is also provided for convenience. It can thus be seen that orthogonally polarised reference pulses and gating pulses arrive at the second silicon photodiode detector 330.

The detected electrical signals from the first silicon photodiode detector 324 and the second silicon photodiode detector 330 are fed to a micro-controller 340 via first and second low pass filters 342 and 344 respectively. The two-photon effect reference and target signals are thus detected via two separate channels, but the micro-controller 340 can perform similar analysis to that described above where only a single two-photon effect detector is used. For example, the micro-controller 340 may use peak detection to start timers to implement a lidar type arrangement. Alternatively, an analyser may be provided to analyse the collected signals to determine the relative times of generation of the signal (e.g. reference and target) peaks.

Importantly, the provision of the first and second polarisation rotators 304 and 322 provides control over the relative intensities of the various optical beams within the apparatus. In particular, adjusting the first polarisation rotator 304 controls the relative proportion of the probe beam that is directed to the target mirror 306 and the reference mirror 310. In other words, the system can balance the laser power down the reference and target arms by rotating the polarisation of the probe beam using the first polarisation rotator 304. This allows the relative intensities of the target and reference pulses to be controlled and may account for variations in the amount of light returned from the target. For example, effects such as the reflectivity of the target may change how much light is needed to produce the best possible measurement signal. The second polarisation rotator 322 provides similar control over the local oscillator beam thereby allowing the relative amount of the LO beam received by the first and second photodiodes 324 and 330 to be appropriately controlled (e.g. balanced).

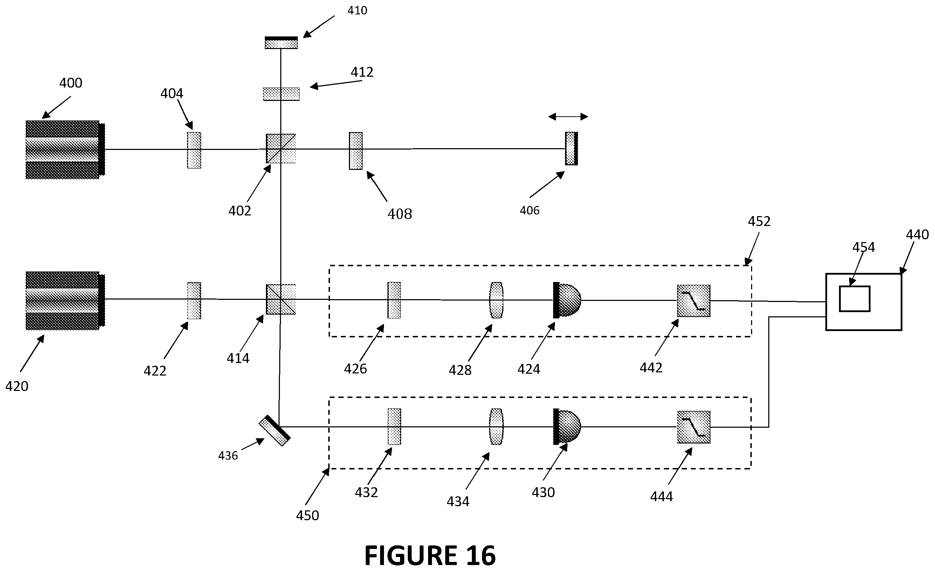

Referring to figure 16, a further alternative configuration of distance metrology apparatus of the present invention is described.

A probe comb 400 generates a train of ultrashort probe pulses (i.e., forming a probe beam) that are passed to a first polarising beam splitter 402 via a first half-wave plate 404. The p-polarised component of the probe beam passes through the first polarising beam splitter 402 and is directed along a first path towards a target mirror 406 via a first quarter wave-plate 408. The s-polarised component of the probe beam is reflected by the first polarising beam splitter 402 and is directed along a second path towards a reference mirror 410 via a second quarter wave-plate 412. The probe pulses reflected from the target mirror 406 (i.e., a train of target pulses) and the probe pulses reflected from the reference mirror 410 (i.e., a train of reference pulses) return to the first polarising beam splitter 402 where they are combined into single beam (i.e., a train of returned pulses) that is directed towards a second polarising beam splitter 414.

A LO comb 420 generates a train of ultrashort gating pulses (i.e., forming an LO beam) that are passed through a second half-wave plate 422 towards the second polarising beam splitter 414. The p-polarised component of the LO beam passes through the second polarising beam splitter 414 towards a first silicon photodiode detector 424 (i.e., a first multi-photon effect detector element). The s-polarised component of the probe beam (i.e., the train of target pulses) are reflected by the second polarising beam splitter 414 and thus also directed towards the first silicon photodiode detector 424. For the reasons outlined above, a high pass optical filter 426 and a lens 428 are provided between the second polarising beam splitter 414 and the first silicon photodiode detector 424. It can thus be seen that orthogonally polarised target pulses and gating pulses arrive at the first silicon photodiode detector 424. The high pass optical filter 426, lens 428, first silicon photodiode detector 424 and first low pass filter 442 together provide a target detection channel 452.

The s-polarised component of the LO beam is reflected from the second polarising beam splitter 414 and directed towards a second silicon photodiode detector 430 (i.e., a second multi-photon effect detector element). The p-polarised component of the probe beam (i.e., the train of reference pulses) is transmitted through the second polarising beam splitter 414 and also directed towards the second silicon photodiode detector 430. For the reasons outlined above, a high pass optical filter 432 and a lens 434 may be provide between the second polarising beam splitter 414 and the second silicon photodiode detector 430. A beam steering (turning) mirror 436 is also provided for convenience. It can thus be seen that orthogonally polarised reference pulses and gating pulses arrive at the second silicon photodiode detector 430. The high pass optical filter 432, lens 434, second silicon photodiode detector 430 and second low pass filter 444 together provide a reference detection channel 450.

The detected electrical signals from the reference detection channel 450 and the target detection channel 452 are fed to a lidar timer circuit 440. The timer circuit 440 uses peak detection to start a timer clock 454 to implement a lidar type arrangement. In particular, the signal from the reference channel starts the timer clock 454 and the signal from the target channel stops the lidar timer clock. The time difference measure by the timer clock 454 is proportional to the absolute distance.

It should be remembered that the distance (d) to the target is calculated by;

$$d = \frac{f_{\text{rep probe}} - f_{\text{rep LO}}}{f_{\text{rep LO}}} . c . \Delta t \qquad (3)$$

This can be rewritten as:

$$d = \frac{\Delta f_{\text{rep}}}{f_{\text{rep LO}}} . c . \Delta t \qquad (4)$$

In effect, the system slows down the speed of light c by a factor of $\frac{f_{rep\,LO}}{\Delta f_{rep}}$ meaning that time measurement $\Delta t$ needs much lower resolution to get a high-resolution absolute distance measured *d*. For example, the effective speed of light is can be slowed by factor of around twenty thousand and can be considered a "time-stretch" factor.

If the maximum measurement rate is $\Delta f_{rep}$ then the unambiguous range is given by $\frac{c}{f_{rep\,LO}}$. The distance resolution, measurement rate and unambiguous range can thus be tuned by appropriate selection of $f_{rep\,probe}$ and $f_{rep\,LO}$.

The repetition rate $f_{rep}$ for each laser is set by the length of the laser cavity. The length of the unambiguous operating range ($L_{\text{unamb}}$) is related to the length of the local oscillator ($L_{\text{LO}}$) by the expression:

$$L_{LO} = \frac{n_{air}}{n_{osc}} L_{unamb} \qquad (5)$$

To achieve operation within an unambiguous range of, say, 3m, a fibre laser oscillator cavity with an $n_{osc} \approx 1.5$ must be around 2m long.

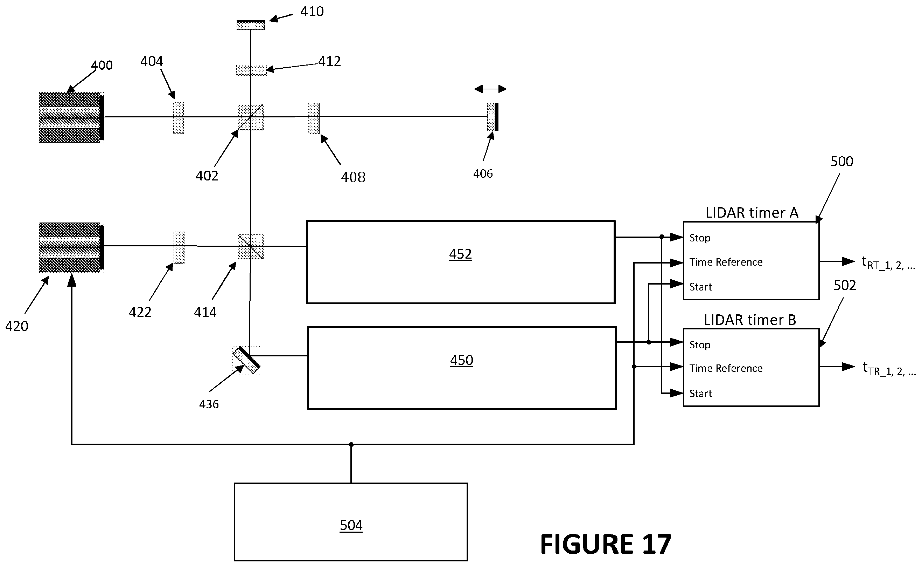

Referring now to figures 17 to 19 it will be explained how it is possible and advantageous to record the time between the first reference pulse, the subsequent target pulse, and the next reference pulse. This can be achieved using two lidar clocks or timers. In particular, with this information it is possible to not only calculate the distance to the target, but also the $\Delta f_{rep}$ from the time between adjacent reference pulses.

Referring to figure 17, there is shown an embodiment that is optically very similar to the arrangement shown in figure 16. Like reference numerals are thus used to identify the same components present in the embodiment described with reference to figure 16. The main difference in the embodiment of figure 17 is that the signals output from the reference and target detection channels 450 and 452 are both fed to a first lidar timer 500 and a second lidar timer 502. These timers 500 and 502 operate using the same time refence derived from a master clock 504. The timing of the LO comb 420 is also derived from the master clock 504.

The first lidar timer 500 is started by a reference pulse and stopped by the target pulse and reports a reference-target time ($t_{RT}$). The second lidar timer 502 is started on the target pulse and stopped by the next reference pulse and reports a target-reference time ($t_{TR}$).

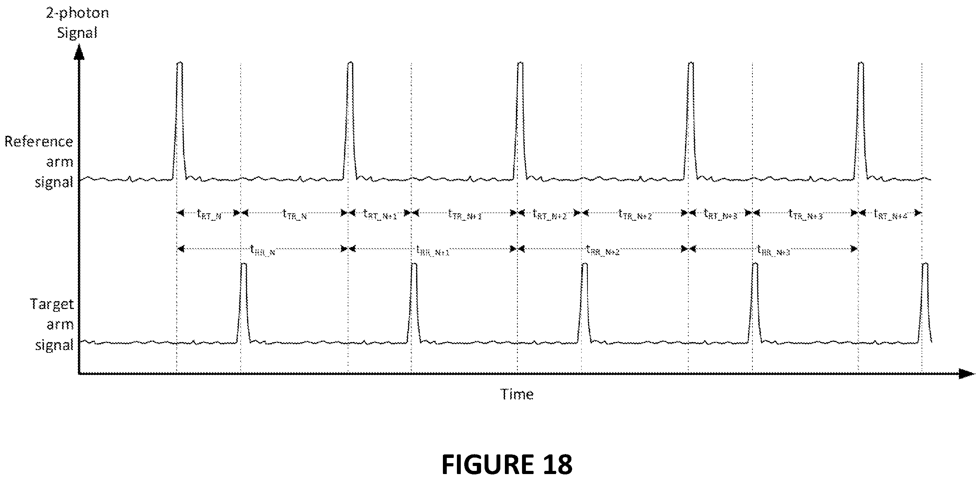

Referring to figure 18, the timing information obtained using the two timers of figure 17 is illustrated. The upper trace shows the reference arm signal and the lower trace shows the target arm signal. The values of the reference-target times ($t_{RT}$) and target-reference times ($t_{TR}$) are shown for two series of N pulses. It should be noted that the time difference $\Delta t$ mentioned in the example above corresponds to $t_{RT}$.

The sum of the reference-target time ($t_{RT}$) and the target-reference time ($t_{TR}$) gives the time between reference pulses or reference-reference time ($t_{RR}$). The reference mirror 410 is not moveable and the reference pulse will therefore occur at fixed time intervals. The period of these intervals is dictated by how long it takes the two laser combs 400 and 420 to come into alignment given their different repetition rates. The reference-reference time ($t_{RR}$) is thus related to the difference in repetition rates by the expression:

$$t_{RR} = \frac{1}{\Delta f_{rep}} \qquad (6)$$

The distance can thus be calculated from:

$$d = \frac{c.t_{RT}}{f_{rep\,LO}.t_{RR}} = \frac{c.t_{RT}}{f_{rep\,LO}.(t_{RT}+t_{TR})} \qquad (7)$$

Since both $t_{RT}$ and $t_{TR}$ are measured (i.e., by the first lidar timer 500 and the second lidar timer 502), it is possible to establish the distance d without needing tight control of $\Delta f_{rep}$.

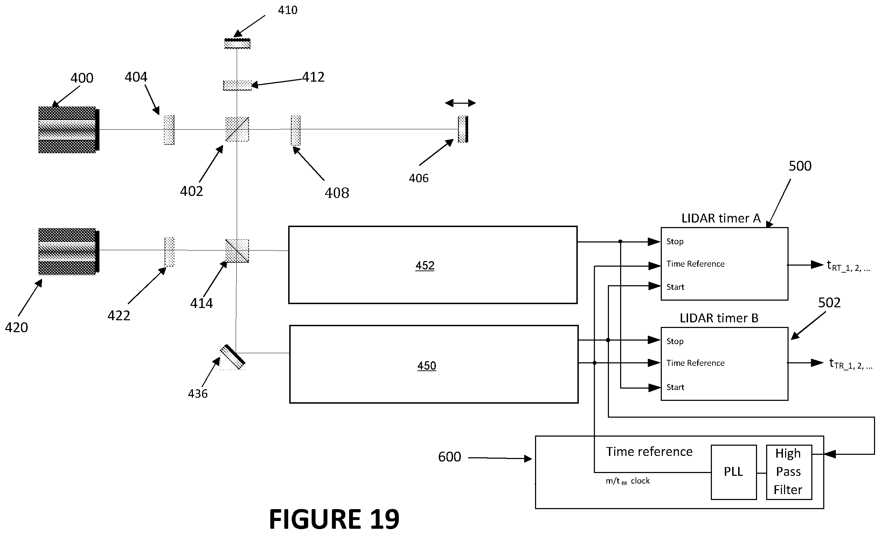

Referring next to figure 19, there is shown an embodiment that is a similar arrangement to those described with reference to figures 16 and 17. Like reference numerals are thus used to identify the same components present in this embodiment that are also present in the embodiments described with reference to figure 16 and 17.

The apparatus of figure 19 differs from the apparatus of figure 17 in that it uses a reference-reference time ($t_{RR}$) signal directly to compensate for drift in the value of $\Delta f_{rep}$. The reference-reference time ($t_{RR}$) is derived by a Phase Locked Loop (PLL) controller 600 from the signal that is output by the reference detection channel 450. In particular, the signal representing the $t_{RR}$ time is fed directly into a high pass filter to select a high harmonic and thence into a Phase Locked Loop where its frequency is multiplied many times (k times in this example). The resulting timing signal derived by the PLL controller 600 is used as the clock reference by the first and second lidar timers 500 and 502. In that way, any changes in $\Delta f_{rep}$ changes the rate of the 'tick' of the reference clock and thus automatically compensates for the impact of any such change in the repetition rate on the distance measurement. This means the repetition rate of the probe comb 420 does not have to be tightly stabilised, which allows $\Delta f_{rep}$ to drift a little with time.

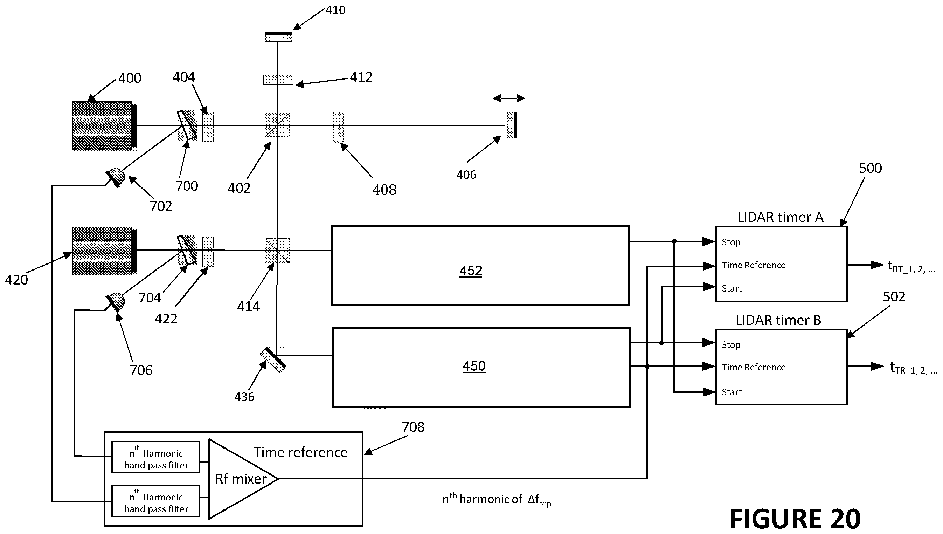

Referring next to figure 20, there is shown an embodiment similar to that described with reference to figure 19 that derives the timing signal in a different way. Like reference numerals are thus used to identify the components present in this embodiment that are also present in the embodiments described with reference to figures 16, 17 and 19.

The apparatus of figure 20 includes a first glass wedge 700 that directs a sample of the light produced by the probe comb 400 to a first fast photodiode 702. A second glass wedge 704 is also provided that directs a sample of the light produced by the LO comb 420 to a second fast photodiode 706. A timing controller 708 receives the electrical signals from the first and second photodiodes 702 and 706. The timing controller 708 band-pass filters each signal to obtain each one's

$n^{th}$ harmonic, which is in the radio frequency (r.f.) band. The r.f. signals are then mixed to produce their beat frequency, which represents $n.\Delta f_{rep}$ which will follow any $\Delta f_{rep}$ drift. This $n.\Delta f_{rep}$ signal can be squared up and used as the reference clock for the LIDAR timers 500 and 502, thus compensating for any $\Delta f_{rep}$ drift in distance measurements.

The arrangement described with reference to figure 20 removes the sensitivity to changes in position of the reference mirror 410 during measurement, which may occur in the arrangement described with refer to figure 19. It would, of course, be possible to extract such timing information in a variety of alternative ways. For example, the signal received by the digitiser 108 in the arrangement described above with reference to figure 3 could be analysed to derive such timing information. The skilled person would also recognise other techniques would be possible.

It should be remembered that the above embodiments are merely examples of the apparatus and methods that could be implemented in accordance with the present invention. For example, although two-photo detection is described it would also be possible to implement multi-photon effect detection that requires the concurrent arrival of three of more photons at the detector. Furthermore, it would be possible to prevent gating and probe pulses from optically interfering with each other in alternative ways to the cross-polarised arrangements that are described above. For example, the probe and LO combs could output trains of pulses in different (e.g. non-overlapping) wavelength ranges or the angle of incidence of the probe and gating pulses on the detector could be arranged to minimise interference effects.

## Claims

1. An optical distance measurement apparatus, comprising;

   at least one optical pulse generator (30,32; 80,94; 120,122; 180,202; 300,320) for generating a train of gating pulses and a train of probe pulses, the train of gating pulses having a different repetition rate than the train of probe pulses, and

   an optical probing arrangement for directing the train of probe pulses to one or more objects (42,44; 84,86; 188, 190; 232,234,236; 306,310) and for collecting returned probe pulses returned from the one or more objects, **characterised in that** the apparatus comprises a multi-photon effect detector (58; 104; 140; 210; 324, 330) and is configured to direct both the train of gating pulses and the returned probe pulses to the multi-photon effect detector.

2. An apparatus according to claim 1, wherein the multi-photon effect detector (58; 104; 140; 210; 324, 330) has a bandgap that is greater than the photon energy of the single photons of the gating and returned probe pulses.

3. An apparatus according to any preceding claim, wherein the multi-photon effect detector (58; 104; 140; 210; 324, 330) comprises a two-photon effect detector, the combined energy of a gating pulse photon and a returned probe pulse photon being greater than the bandgap of the two-photon effect detector.

4. An apparatus according to any preceding claim, wherein the multi-photon effect detector (58; 104; 140; 210; 324, 330) comprises Silicon.

5. An apparatus according to any preceding claim, wherein the multi-photon effect detector (58; 104; 140; 210; 324, 330) comprises a plurality of detector elements.

6. An apparatus according to any preceding claim, comprising an analyser (62; 108; 150; 216; 250; 340; 440; 500,502 ) for analysing the output of the multi-photon effect detector as a function of time.

7. An apparatus according to any preceding claim, comprising a time-of-flight monitor (340; 440; 500, 502) that includes at least one peak detector and at least one timer, the at least one peak detector being configured to detect peaks in the output of the multi-photon effect detector and the at least one timer being configured to measure the time between the detected peaks.

8. An apparatus according to any preceding claim, wherein the at least one optical pulse generator (30,32; 80,94; 120,122; 180,202; 300,320) comprises a probe mode-locked laser for generating the train of probe pulses and a local oscillator mode-locked laser for generating the train of gating pulses.

9. An apparatus according to claim 8, wherein the probe mode-locked laser and the local oscillator mode-locked laser are both free-running mode-locked lasers.

10. An apparatus according to any preceding claim, wherein the optical configuration of the apparatus prevents optical interference of the gating pulses and returned probe pulses at the multi-photon effect detector.

11. An apparatus according to claim 10, wherein the gating pulses have a different polarisation state to the returned probe pulses on arrival at the multi-photon effect detector.

12. An apparatus according to any one of claims 10 to 11, wherein the gating pulses have a different optical wavelength to the probe pulses.

13. An apparatus according to any preceding claim, wherein the one or more objects (42,44; 84,86; 188, 190; 232,234,236; 306,310) comprise a reference object (42; 84; 188; 310) and one or more remotely located target objects (44; 86; 190; 232,234,236; 306), the returned probe pulses comprising reference pulses returned from the reference object and target pulses returned from the one or more remotely located target objects.

14. An apparatus according to any preceding claim, wherein the optical probing arrangement comprises a beam splitter (230) that splits an input probe beam comprising the train of probe pulses into a plurality of output probe beams that are directed to a plurality of targets, the optical probing arrangement also collecting returned probe pulses from each of the plurality of targets.

15. A method for optical distance measurement, comprising the steps of;

(i) generating a train of probe pulses,
(ii) generating a train of gating pulses, the train of gating pulses being generated at a different repetition rate than the train of probe pulses,
(iii) directing the train of probe pulses towards one or more objects (42,44; 84,86; 188, 190; 232,234,236; 306,310) and collecting returned probe pulses returned from the one or more objects,
(iv) directing the train of gating pulses and the returned probe pulses to a detector (58; 104; 140; 210; 324, 330), wherein the detector is configured to implement multi-photon effect detection.

**Patentansprüche**

1. Optische Distanzmessvorrichtung, umfassend:

mindestens einen Generator (30, 32; 80, 94; 120, 122; 180, 202; 300, 320) für optische Impulse zum Erzeugen einer Folge von Gatterimpulsen und
einer Folge von Abtastimpulsen, wobei die Folge von Gatterimpulsen eine andere Wiederholungsrate als die Folge von Abtastimpulsen aufweist, und
eine optische Abtastanordnung zum Leiten der Folge von Abtastimpulsen zu einem oder mehreren Objekten (42, 44; 84, 86; 188, 190; 232, 234, 236; 306, 310) und
zum Sammeln zurückgesandter Abtastimpulse, die von dem einen oder den mehreren Objekten zurückgesandt werden,
**dadurch gekennzeichnet, dass** die Vorrichtung einen
Multiphotoneneffektdetektor (58; 104; 140; 210; 324, 330) umfasst und konfiguriert ist, um sowohl die Folge von Gatterimpulsen als auch die zurückgesandten Abtastimpulse zu dem Multiphotoneneffektdetektor zu leiten.

2. Vorrichtung nach Anspruch 1, wobei der Multiphotoneneffektdetektor (58; 104; 140; 210; 324, 330) eine Bandlücke aufweist, die größer als die Photonenenergie der einzelnen Photonen der Gatter- und zurückgesandten Abtastimpulse ist.

3. Vorrichtung nach einem der vorhergehenden Ansprüche, wobei der Multiphotoneneffektdetektor (58; 104; 140; 210; 324, 330) einen Zweiphotoneneffektdetektor umfasst, wobei die kombinierte Energie eines Gatterimpulsphotons und eines zurückgesandten Abtastimpulsphotons größer als die Bandlücke des Zweiphotoneneffektdetektors ist.

4. Vorrichtung nach einem der vorhergehenden Ansprüche, wobei der Multiphotoneneffektdetektor (58; 104; 140; 210; 324, 330) Silizium umfasst.

5. Vorrichtung nach einem der vorhergehenden Ansprüche, wobei der Multiphotoneneffektdetektor (58; 104; 140; 210;

324, 330) eine Vielzahl von Detektorelementen umfasst.

6. Vorrichtung nach einem der vorhergehenden Ansprüche, umfassend einen Analysator (62; 108; 150; 216; 250; 340; 440; 500, 502) zum Analysieren der Ausgabe des Multiphotoneneffektdetektors als eine Funktion der Zeit.

7. Vorrichtung nach einem der vorhergehenden Ansprüche, umfassend einen Laufzeitmonitor (340; 440; 500, 502), der mindestens einen Spitzenwertdetektor und mindestens einen Zeitgeber umfasst, wobei der mindestens eine Spitzenwertdetektor konfiguriert ist, um Spitzenwerte in der Ausgabe des Multiphotoneneffektdetektors zu detektieren, und der mindestens eine Zeitgeber konfiguriert ist, um die Zeit zwischen den detektierten Spitzenwerten zu messen.

8. Vorrichtung nach einem der vorhergehenden Ansprüche, wobei der mindestens eine Generator (30, 32; 80, 94; 120, 122; 180, 202; 300, 320) für optische Impulse einen abtastmodengekoppelten Laser zum Erzeugen der Folge von Abtastimpulsen und einen lokaloszillatormodengekoppelten Laser zum Erzeugen der Folge von Gatterimpulsen umfasst.

9. Vorrichtung nach Anspruch 8, wobei der abtastmodengekoppelte Laser und der lokaloszillatormodengekoppelte Laser beide freilaufende modengekoppelte Laser sind.

10. Vorrichtung nach einem der vorhergehenden Ansprüche, wobei die optische Konfiguration der Vorrichtung eine optische Interferenz der Gatterimpulse und der zurückgesandten Abtastimpulse an dem Multiphotoneneffektdetektor verhindert.

11. Vorrichtung nach Anspruch 10, wobei die Gatterimpulse einen anderen Polarisationszustand als die zurückgesandten Abtastimpulse bei Ankunft an dem Multiphotoneneffektdetektor aufweisen.

12. Vorrichtung nach einem der Ansprüche 10 bis 11, wobei die Gatterimpulse eine andere optische Wellenlänge als die Abtastimpulse aufweisen.

13. Vorrichtung nach einem der vorhergehenden Ansprüche, wobei das eine oder die mehreren Objekte (42, 44; 84, 86; 188, 190; 232, 234, 236; 306, 310) ein Referenzobjekt (42; 84; 188; 310) und ein oder mehrere entfernt angeordnete Zielobjekte (44; 86; 190; 232, 234, 236; 306) umfassen, wobei die zurückgesandten Abtastimpulse Referenzimpulse, die von dem Referenzobjekt zurückgesandt werden, und Zielimpulse, die von dem einen oder den mehreren entfernt angeordneten Zielobjekten zurückgesandt werden, umfassen.

14. Vorrichtung nach einem der vorhergehenden Ansprüche, wobei die optische Abtastanordnung einen Strahlteiler (230) umfasst, der einen Eingangsabtaststrahl, der die Folge von Abtastimpulsen umfasst, in eine Vielzahl von Ausgangsabtaststrahlen teilt, die zu einer Vielzahl von Zielen geleitet werden, wobei die optische Abtastanordnung auch zurückgesandte Abtastimpulse von jedem der Vielzahl von Zielen sammelt.

15. Verfahren zur optischen Distanzmessung, umfassend die folgenden Schritte:

(i) Erzeugen einer Folge von Abtastimpulsen,
(ii) Erzeugen einer Folge von Gatterimpulsen, wobei die Folge von Gatterimpulsen mit einer anderen Wiederholungsrate als die Folge von Abtastimpulsen erzeugt wird,
(iii) Leiten der Folge von Abtastimpulsen zu einem oder mehreren Objekten (42, 44; 84, 86; 188, 190; 232, 234, 236; 306, 310) und Sammeln zurückgesandter Abtastimpulse, die von dem einen oder den mehreren Objekten zurückgesandt werden,
(iv) Leiten der Folge von Gatterimpulsen und der zurückgesandten Abtastimpulse zu einem Detektor (58; 104; 140; 210; 324, 330), wobei der Detektor konfiguriert ist, um eine Multiphotoneneffektdetektion zu implementieren.

## Revendications

1. Un appareil de mesure de distance optique, comprenant :

au moins un générateur d'impulsions optiques (30, 32 ; 80, 94 ; 120, 122 ; 180, 202 ; 300, 320) pour générer un train d'impulsions de déclenchement et un train d'impulsions de palpeur, le train d'impulsions de déclenchement ayant un taux de répétition différent du train d'impulsions de palpeur, et

un agencement de palpage optique pour diriger le train d'impulsions de palpeur vers un ou plusieurs objets (42, 44 ; 84, 86 ; 188, 190 ; 232, 234, 236 ; 306, 310) et pour collecter les impulsions de palpeur renvoyées par le ou les objets,

**caractérisé en ce que** l'appareil comprend un détecteur à effet multiphotonique (58 ; 104 ; 140 ; 210 ; 324, 330) et est configuré pour diriger à la fois le train d'impulsions de déclenchement et les impulsions de palpeur renvoyées vers le détecteur à effet multiphotonique.

2. Un appareil selon la revendication 1, dans lequel le détecteur à effet multiphotonique (58 ; 104 ; 140 ; 210 ; 324, 330) a une largeur de bande interdite qui est supérieure à l'énergie photonique des photons uniques des impulsions de déclenchement et de palpeur renvoyées.

3. Un appareil selon l'une quelconque des revendications précédentes, dans lequel le détecteur à effet multi-photonique (58 ; 104 ; 140 ; 210 ; 324, 330) comprend un détecteur à effet à deux photons, l'énergie combinée d'un photon impulsionnel de déclenchement et d'un photon impulsionnel de palpeur renvoyée étant supérieure à la bande interdite du détecteur à effet à deux photons.

4. Un appareil selon l'une quelconque des revendications précédentes, dans lequel le détecteur à effet multiphotonique (58 ; 104 ; 140 ; 210 ; 324, 330) comprend du silicium.

5. Un appareil selon l'une quelconque des revendications précédentes, dans lequel le détecteur à effet multiphotonique (58 ; 104 ; 140 ; 210 ; 324, 330) comprend une pluralité d'éléments détecteurs.

6. Un appareil selon l'une quelconque des revendications précédentes, comprenant un analyseur (62 ; 108 ; 150 ; 216 ; 250 ; 340 ; 440 ; 500, 502) pour analyser la sortie du détecteur à effet multiphotonique en fonction du temps.

7. Un appareil selon l'une quelconque des revendications précédentes, comprenant un moniteur de temps de vol (340 ; 440 ; 500, 502) qui comprend au moins un détecteur de crête et au moins un temporisateur, le ou les détecteurs de crête étant configurés pour détecter des crêtes dans la sortie du détecteur d'effet multiphotonique et le ou les temporisateurs étant configurés pour mesurer le temps entre les crêtes détectées.

8. Un appareil selon l'une quelconque des revendications précédentes, dans lequel le ou les générateurs d'impulsions optiques (30, 32 ; 80, 94 ; 120, 122 ; 180, 202 ; 300, 320) comprend un laser à verrouillage de mode de palpeur pour générer le train d'impulsions de palpeur et un laser à verrouillage de mode d'oscillateur local pour générer le train d'impulsions de déclenchement.

9. Un appareil selon la revendication 8, dans lequel le laser à verrouillage de mode de palpeur et le laser à verrouillage de mode d'oscillateur local sont tous deux des lasers à verrouillage de mode à fonctionnement libre.

10. Un appareil selon l'une quelconque des revendications précédentes, dans lequel la configuration optique de l'appareil empêche l'interférence optique des impulsions de déclenchement et les impulsions de palpeur renvoyées au niveau du détecteur à effet multiphotonique.

11. Un appareil selon la revendication 10, dans lequel les impulsions de déclenchement ont un état de polarisation différent des impulsions de palpeur renvoyées à l'arrivée au détecteur à effet multiphotonique.

12. Un appareil selon l'une quelconque des revendications 10 à 11, dans lequel les impulsions de déclenchement disposent d'une longueur d'onde optique différente des impulsions de palpeur.

13. Un appareil selon l'une quelconque des revendications précédentes, dans lequel le ou les objets (42, 44 ; 84, 86 ; 188, 190 ; 232, 234, 236 ; 306, 310) comprennent un objet de référence (42 ; 84 ; 188 ; 310) et un ou plusieurs objets cibles situés à distance (44 ; 86 ; 190 ; 232, 234, 236 ; 306), les impulsions de palpeur renvoyées comprenant des impulsions de référence renvoyées par l'objet de référence et des impulsions cibles renvoyées par le ou les objets cibles situés à distance.

14. Un appareil selon l'une quelconque des revendications précédentes, dans lequel l'agencement de palpage optique comprend un diviseur de faisceau (230) qui divise un faisceau de palpeur d'entrée comprenant le train d'impulsions de palpeur en une pluralité de faisceaux de palpeur de sortie qui sont dirigés vers une pluralité de cibles, l'agencement de palpage optique recueillant également des impulsions de palpeur renvoyées à partir de chacune de la pluralité de cibles.

15. Un procédé de mesure de distance optique, comprenant les étapes consistant à :

(i) générer un train d'impulsions de palpeur,
(ii) générer un train d'impulsions de déclenchement, le train d'impulsions de déclenchement étant généré à une fréquence de répétition différente de celle du train d'impulsions de palpeur,
(iii) diriger le train d'impulsions de palpeur vers un ou plusieurs objets (42, 44 ; 84, 86 ; 188, 190 ; 232, 234, 236 ; 306, 310) et collecter les impulsions de palpeur renvoyées par le ou les objets,
(iv) diriger le train d'impulsions de déclenchement et les impulsions de palpeur renvoyées vers un détecteur (58 ; 104, 140 ; 210 ; 324, 330), le détecteur étant configuré pour mettre en œuvre une détection à effet multi-photonique.

FIGURE 1
(Prior Art)

**FIGURE 2**

FIGURE 3

FIGURE 4

FIGURE 5

**FIGURE 6**

FIGURE 7b

FIGURE 7a

**FIGURE 8**

FIGURE 9

31

FIGURE 10

FIGURE 11

**FIGURE 12**

**FIGURE 13**

FIG. 14b

FIG. 14a

FIGURE 15

**FIGURE 16**

FIGURE 17

**FIGURE 18**

**FIGURE 19**

FIGURE 20

EP 4 256 367 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110285980 A

- US 6195167 B

**Non-patent literature cited in the description**

- **LIU et al.** *Optics Express*, 2011, vol. 19 (19)
- **ZHANG, H. et al.** *Optics Express*, 2014, vol. 22 (6), 6597-6604

- **SHI, H et al.** CLEO: Science and Innovations. Optical Society of America, 2015, SF2L-3